# EUROPÄISCHE PATENTSCHRIFT

(11) **EP 0 436 768 B1**
(45) Veröffentlichungstag und Bekanntmachung des Hinweises auf die Patenterteilung: **16.06.1993**
(21) Anmeldenummer: 90100697.3
(22) Anmeldetag: 13.01.1990
(51) Int. Cl.: B23B 31/28

(54) **Vorrichtung zur Erzeugung einer Stellkraft für die Spannglieder einer Spanneinrichtung**
Device for generating a clamping force in a clamping device
Dispositif de génération d'une force de serrage dans un dispositif de serrage

(30) Priorität: 12.01.1990 DE 4000714
(43) Veröffentlichungstag der Anmeldung: 17.07.1991
(73) Patentinhaber: Röhm, Günter Horst, D-89567 Sontheim (DE)
(72) Erfinder: Röhm, Günter Horst, D-89567 Sontheim (DE)
(74) Vertreter: Fay, Hermann, Dipl.-Phys. Dr.

(56) Entgegenhaltungen:
- DE-A- 3 218 083
- FR-A- 2 208 319
- GB-A- 383 162
- GB-A- 2 194 615

## Beschreibung

Die Erfindung betrifft eine Vorrichtung zur Erzeugung einer Stellkraft für die Spannglieder einer Spanneinrichtung, insbesondere zum Verstellen der Spannbacken eines Spannfutters oder der von ihnen ausgeübten Spannkraft, mit einer die Spanneinrichtung tragenden, zum Umlauf antreibbaren Arbeitsspindel einer Drehmaschine und einer in der hohlen Arbeitsspindel axial verstellbar angeordneten Stellstange für die Betätigung der Spannglieder, wobei ein an der Arbeitsspindel mitumlaufend angeordnetes Bewegungswandlungssystem ein die Stellstange axial betätigendes Ausgangsglied und mindestens ein in Bezug auf die Arbeitsspindel drehbar und achsenparallel angeordnetes Eingangsglied besitzt, das in Triebverbindung mit mindestens einem von zwei Stellrädern steht, die an der Arbeitsspindel zueinander und zur Arbeitsspindel selbst koaxial und drehbar angeordnet und miteinander gegenläufig gekoppelt sind.

Vorrichtungen dieser Art sind in der nicht zum vorveröffentlichten Stand der Technik gehörenden europäischen Patentanmeldung EP-A-403 693 beschrieben. Bei ihnen dient zum Betätigen der Stellstange ein stationär angeordneter Stellmotor, der die Stellräder relativ zur Arbeitsspindel antreibt, unabhängig davon, ob die Arbeitsspindel still steht oder umläuft. Der Stellmotor bewirkt also sowohl das Spannen und Lösen der Spannglieder im Stillstand der Arbeitsspindel als auch das Nachspannen der Spannglieder bei umlaufender Arbeitsspindel. Die gegenläufige Kopplung der Stellräder erfolgt durch ein stationär im Antriebsstrang zwischen den Stellrädern und dem Stellmotor angeordnetes Umlauf-Ausgleichsgetriebe (Differentialgetriebe), bei dem die vom Stellmotor eingeleitete Drehbewegung verzweigt und über zwei Abtriebsräder ausgeleitet wird, die mit je einem der Stellräder in Drehverbindung stehen, wobei in der Drehverbindung zwischen einem der Abtriebsräder und dem entsprechenden Stellrad eine Umkehr des Drehsinns derart erfolgt, daß dieses Abtriebsrad und das Stellrad und daher auch die beiden Stellräder selbst jeweils gegensinnig zueinander umlaufen, wenn der Stellmotor betätigt wird.

Nachteilig ist hier, daß alle im Antriebsstrang zwischen den Stellrädern und den Abtriebsrädern sowie zwischen letzteren selbst liegenden Getrieberäder sich bei umlaufender Arbeitsspindel wie diese selbst drehen, und zwar auch dann, wenn bei umlaufender Arbeitsspindel die Spannglieder der Spanneinrichtung überhaupt nicht betätigt werden und der Stellmotor also ausgeschaltet ist. Diese laufende Beanspruchung der Getriebeglieder ist nicht nur mit entsprechendem Verschleiß, sondern auch mit ständigen erheblichen Leistungsverlusten, Wärme- und besonders auch Geräuschentwicklungen verbunden, was alles um so störender in Erscheinung tritt, je höher die Drehzahl der Arbeitsspindel ist. Außerdem ist eine solche Anordnung konstruktiv aufwendig und störanfällig.

Der Erfindung liegt die Aufgabe zugrunde, eine Vorrichtung der eingangs genannten Art so auszubilden, daß eine Betätigung der Stellstange sowohl im spannenden wie lösenden Sinn bei umlaufender Arbeitsspindel auf besonders einfache und im jeweils gewünschten Ausmaß auch genaue Weise möglich ist.

Diese Aufgabe wird nach der Erfindung dadurch gelöst, daß eine Bremseinrichtung vorgesehen ist, mit der die Stellräder unabhängig voneinander bremsbar sind, wobei die Größe des Bremsmoments steuerbar ist.

Die Erfindung geht bei dieser Lösung davon aus, daß die Stellstangenbetätigung im Stillstand der Arbeitsspindel in der Regel ohne Schwierigkeiten möglich ist, und zwar auf technisch sehr vielseitige und verschiedene Weisen, sowohl im Hinblick auf die Art des Antriebs als auch der Kraftübertragung. Denn bei stillstehender Arbeitsspindel ist die Ankupplung des Stellmotors und/oder der Anschluß eines Druckmediums für die Kraftübertragung an das ruhende Bewegungswandlungssystem ohne weiteres gegeben. Problematisch wird die Stellstangenbetätigung erst bei laufender Arbeitsspindel, wenn die Ankopplung des Stellmotors und/oder der Anschluß des Druckmediums an das dann mit der Arbeitsspindel entsprechend umlaufende Bewegungswandlungssystem um so größere Schwierigkeiten bereitet, je höher die Drehzahl der Arbeitsspindel ist. Es wurde daher (z. B. EP-0 200 796-A2) schon vorgeschlagen, mit der Arbeitsspindel und der Spanneinrichtung umlaufende Energiespeicher vorzusehen, die im Spindelstillstand aufgeladen werden und aus welchen das Bewegungswandlungssystem gespeist wird, während die Arbeitsspindel umläuft und von dem die Stellstangenbetätigung im Spindelstillstand bewirkenden Stellmotor und/oder der Druckquelle für das Druckmedium abgeschaltet ist. Jedoch ist die Kapazität solcher regelmäßig auf Federgliedern beruhenden Energiespeicher äußerst begrenzt.

Durch die Erfindung werden alle diese Probleme in überraschend einfacher Art dadurch vermieden, daß das Bewegungswandlungssystem für die Stellstangenbetätigung bei umlaufender Arbeitsspindel aus der der Arbeitsspindel durch ihren eigenen Antrieb mitgeteilten Energie gespeist wird, die durch den Antrieb der Arbeitsspindel laufend nachgeliefert werden und sich daher anders als der Energieinhalt eines Speichers nicht erschöpfen kann. Bei der erfindungsgemäßen Vorrichtung können daher Stellmotoren, Druckquellen und andere Kraftmittel, die zum Betätigen der Stellstange bei stillstehender Arbeitsspindel etwa vorgesehen sind, bei umlaufender Arbeitsspindel vom Bewegungswandlungssystem abgekuppelt bzw. abgeschaltet bleiben, ohne daß dadurch das Bewegungswandlungssystem funktionsunfähig wird. Zur Betätigung der Stellstange bei umlaufender Arbeitsspindel ist es erfindungsgemäß nur erforderlich, das eine oder andere Stellrad zu bremsen und dadurch relativ zur Arbeitsspindel zu verdrehen, je nach Richtung, in der die Stellstange axial vom Ausgangsglied des Bewegungswandlungssystem beaufschlagt werden soll, ob also ein Nachspannen oder Lösen der Spannglieder an der Spanneinrichtung beabsichtigt ist. Dabei ist sogar ohne weiteres auch ein Öffnen und Schließen der Spanneinrichtung bei laufender Arbeitsspindel möglich, wie dies bei Stangenarbeiten zum Umspannen des Werkstücks ohne den Zwang zur Stillsetzung der Arbeitsspindel gewünscht wird. In jedem Fall besteht dabei weiter die Möglichkeit, durch Steuerung der Größe des Bremsmoments die die Stellstange beaufschlagende Kraft und damit die Spannkraft der Spanneinrichtung genau beeinflussen zu können. Zwar erzeugt die Bremsung der Stellräder selbstverständlich Wärme, jedoch ist die Wärmeentstehung nur auf die Dauer des Bremsvorgangs, also auf die in Bezug auf die gesamte Betriebszeit jeweils nur kurze Zeit der axialen Beaufschlagung der Stellstange beschränkt, so daß die Wärmeabfuhr ohne weiteres beherrschbar ist.

Ist dem Ausgangsglied des Bewegungswandlungssystems außer der rein axialen Verstellbewegungskomponente auch eine Drehbewegung in Bezug auf die Stellstange überlagert, so muß, soweit die Stellstange drehfest an der Spanneinrichtung angeschlossen ist, die Anordnung im übrigen noch so getroffen werden, daß zwischen dem Ausgangsglied des Bewegungswandlungssystems und der Stellstange eine die freie Verdrehung beider gegeneinander ermöglichende, axial kraftschlüssige Verbindungseinrichtung eingeschaltet ist. Im Prinzip kann die axiale Verbindung zwischen dem Ausgangsglied und der Stellstange außer kraftschlüssig auch formschlüssig sein. Dann besteht aber bei der Betätigung des Bewegungswandlungssystems wegen der hohen Drehzahlen der Arbeitsspindel die Gefahr erheblicher Impulsspitzen bei der Kraftübertragung vom Ausgangsglied auf die Stellstange, und zwar um so mehr, je kürzer der Verstellweg der Stellstange in Bezug auf die Spanneinrichtung ist. Um solche Impulsspitzen bei der Kraftübertragung abzupuffern, empfiehlt es sich, zwischen dem Ausgangsglied des Bewegungswandlungssystems und der Stellstange Kraftübertragungsglieder vorzusehen, die innerhalb vorgegebener Grenzen eine axiale Relativverstellung zwischen dem Ausgangsglied und der Stellstange ermöglichen, wobei die Größe der zwischen beiden übertragenen Kraft vom relativen Verstellweg zwischen beiden abhängt. Vorzugsweise sind diese Kraftübertragungsglieder von Federelementen gebildet, welche das Ausgangsglied axial in beiden Richtungen an der Stellstange abstützen.

Vorzugsweise ist zur gegenläufigen Kopplung beider Stellräder mindestens ein an der Arbeitsspindel mitumlaufend angeordnetes Getriebeglied vorgesehen, das in Triebverbindung mit den Stellrädern steht und an der Arbeitsspindel in deren Umfangsrichtung so abgestützt ist, daß eine Relativverdrehung des einen Stellrads in Bezug auf die Arbeitsspindel eine entgegengerichtete Relativverdrehung des anderen Stellrades ergibt. Das hat den Vorteil, daß sich eine Beanspruchung des Getriebegliedes nur während der Bremsung eines der Stellräder ergibt, weil ohne solche Bremsung die Stellräder synchron miteinander und mit der Arbeitsspindel umlaufen. Im einzelnen kann das Getriebeglied von einem oder mehreren miteinander kämmenden Ritzeln gebildet sein, die an der Arbeitsspindel gelagert sind und mit an den Stellrädern jeweils vorgesehenen Zahnkränzen im Eingriff stehen. Eine andere vorteilhafte Ausführungsform ist dadurch gekennzeichnet, daß das Getriebeglied von einem oder mehreren, je zwei Ritzel drehfest tragenden Achszapfen gebildet ist, die drehbar in einem seinerseits ebenfalls drehbar an der Arbeitsspindel angeordneten Ring gelagert sind, wobei jeweils das eine Ritzel der Achszapfen in einen Zahnkranz an einem der Stellräder und das andere Ritzel in einen an der Arbeitsspindel festen Zahnkranz greift. In diesem Fall kann das zweite Stellrad zweckmäßigerweise unmittelbar von dem die Achszapfen lagernden Ring gebildet sein.

Das Bewegungswandlungssystem kann mechanisch, pneumatisch und/oder hydraulisch arbeiten. Als rein mechanische Ausführungsform besitzt es in der Regel ein oder mehrere Spanngewinde, welche die Drehbewegung des Eingangsgliedes in die axiale Stellbewegung des Ausgangsgliedes umsetzen. Ein in dieser Hinsicht aus sowohl kinematischen als auch dynamischen Gründen bevorzugte Ausführungsform ist dadurch gekennzeichnet, daß das Bewegungswandlungssystem mindestens eine in Bezug auf die Arbeitsspindel achsenparallel und exzentrisch angeordnete und drehbar und axial unverschiebbar gelagerte Spanngewindespindel aufweist, die mit ihrem Spanngewinde in einer im Ausgangsglied des Bewegungswandlungssystems vorgesehenen Gewindeaufnahme läuft, ferner über das Eingangsglied des Bewegungswandlungssystems in Drehrichtung mit mindestens einem der Stellräder in Triebverbindung steht und an der Arbeitsspindel in deren Umfangsrichtung so abgestützt ist, daß eine Relativverdrehung der Arbeitsspindel gegenüber dem mit der Spanngewindespindel in Triebverbindung stehenden Stellrad eine Verdrehung der Spanngewindespindel um die eigene Achse ergibt. Zweckmäßig ist die Spanngewindespindel mehrfach vorgesehen und sind dann die Spanngewindespindeln über den Umfang der Arbeitsspindel verteilt angeordnet.

Eine in konstruktiver Hinsicht besonders einfache und daher vorzugsweise verwirklichte Ausführungsform ist dadurch gekennzeichnet, daß die Spanngewindespindel ganz oder teilweise das Getriebeglied bildet, bzw. bei mehreren Spanngewindespindeln diese zugleich die Funktion der die Stellräder gegenläufig miteinander koppelnden Getriebeglieder erfüllen. Um die Spanngewindespindeln aus ihrem von einem vorangegangenen Spannvorgang unter Umständen sehr festen Spannsitz in den Gewindeaufnahmen des Ausgangsgliedes beim Bremsen des entsprechenden Stellrades zuverlässig lösen zu können, kann es sich empfehlen, die Gewindeaufnahmen für die Spanngewindespindeln in Gewindebuchsen auszubilden, die im Ausgangsglied zwischen zwei Anschlägen begrenzt verdrehbar und axial unverschiebbar gelagert sind. Die Spanngewindespindeln können sich dann bei der Bremsung eines der Stellräder zunächst unter Drehmitnahme der Gewindebuchsen frei drehen, bis die Gewindebuchsen an den Anschlägen aufgehalten werden und die dadurch erzeugte Schlagwirkung auf den Gewindesitz die Spanngewindespindeln in den Gewindeaufnahmen frei werden läßt.

Eine zu besonders symmetrischen Beanspruchungsverhältnissen im Bewegungswandlungssystem führende Gestaltung ist dadurch gekennzeichnet, daß die an der Arbeitsspindel in Umfangsrichtung fest angeordneten Spanngewindespindeln paarweise vorgesehen und jeweils mit einem Zahnritzel als Eingangsglied für das Bewegungswandlungssystem ausgestattet sind, wobei die erste Spanngewindespindel des Spindelpaares mit ihrem Ritzel in einen Zahnkranz des einen Stellrades und die zweite Spanngewindespindel des Spindelpaares mit ihrem Ritzel in einen Zahnkranz des anderen Stellrades greift, und daß die beiden Spanngewindespindeln des Spindelpaares über eine weitere Ritzelverbindung miteinander gegenläufig im Eingriff stehen sowie einander entgegengesetzten Gewindesinn ihrer Spanngewinde aufweisen. Dieser entgegengesetzte Gewindesinn der Spanngewinde ergibt trotz gegenläufiger Drehung der Spanngewindespindeln die gleiche Axialverstellung des Ausgangsgliedes an beiden Spanngewindespindeln.

Soweit die beiden Stellräder in schon erwähnter Weise durch Ritzel miteinander gekoppelt sind, die drehfest an Achszapfen vorgesehen sind, die in einem drehbar an der Arbeitsspindel angeordneten Ring gelagert sind, können die Spanngewindespindeln zweckmäßigerweise unmittelbar diese Achszapfen bilden, die dann nicht mehr zusätzlich zu den Spanngewindespindeln vorgesehen zu werden brauchen.

Die Bremseinrichtung kann entweder eine einzige Bremse besitzen, die wahlweise auf das eine oder andere Stellrad umschalt- oder umstellbar ist, oder für jedes Stellrad über eine eigene Bremse verfügen, wobei diese Bremsen unabhängig voneinander betätigt und/oder gesteuert werden können. In der einfachsten Ausführungsform kann die Bremseinrichtung eine für jedes Stellrad vorgesehene Reibbremse, insbesondere Backen- oder Axial-(Scheiben-)bremse mit als Bremsscheibe ausgebildetem Stellrad sein. Eine hinsichtlich der Steuerung und Regelung der Bremswirkung wie auch wegen des fehlenden mechanischen Verschleißes wesentlich bessere und daher bevorzugte Ausführungsform ist dadurch gekennzeichnet, daß die Bremseinrichtung für jedes Stellrad als eine als Bremse arbeitende Induktionsmaschine mit dem Stellrad als Läufer und einem das Stellrad umgebenden Statorring mit Erregerwicklung ausgebildet ist, in der die Größe des Erregerstroms steuerbar ist. Insbesondere kann die Induktionsmaschine als Wirbelstrombremse ausgebildet sein. In jedem Fall bestimmt die Größe des Erregerstroms im wesentlichen die Bremswirkung, die daher mit den üblichen elektrotechnischen Schaltungsmitteln unschwer in gewünschter Weise ein- und ausgeschaltet und bezüglich ihrer Größe gesteuert werden kann. Im übrigen wird man zweckmäßigerweise die Bremseinrichtung mit einer Meßeinrichtung für die Größe des auf die Stellräder ausgeübten Bremsmomentes versehen, um für den Fall einer Steuerung und/oder Regelung der Bremswirkung den Istwert des Bremsmoments abnehmen zu können.

Die erfindungsgemäße Vorrichtung ermöglicht die Betätigung des Bewegungswandlungssystems durch die Bremseinrichtung naturgemäß nur bei umlaufender Arbeitsspindel. Sie kann aber ohne weiteres mit denjenigen Einrichtungen kombiniert, welche die Stellstange im Stillstand der Arbeitsspindel zum Schließen und Öffnen bzw. Spannen und Lösen der Spanneinrichtung betätigen. So kann zur Betätigung der Stellstange im Stillstand der Arbeitsspindel selbstverständlich ein stationär angeordneter Stellmotor vorgesehen sein, dessen Abtriebsglied im Stillstand der Arbeitsspindel an einem der Stellräder in Drehrichtung ein- und auskuppelbar ist. Ist der Stellmotor reversierbar, genügt die Möglichkeit des Ein- und Auskuppelns an nur einem der Stellräder; andernfalls muß der Stellmotor am einen wie am anderen Stellrad ein- und auskuppelbar sein, je nach beabsichtigter Betätigungsrichtung der Stellstange. In jedem dieser Fälle ist die Arbeitsspindel durch ihre eigene Antriebseinrichtung gegen eine sonst vom Stellmotor bewirkte Mitdrehung gesichert.

Es besteht aber auch die Möglichkeit, auf einen solchen Stellmotor überhaupt zu verzichten und auch im Stillstand der Spanneinrichtung den Antrieb der Arbeitsspindel selbst zum Betätigen der Stellstange und damit zum Schließen und Öffnen bzw. Spannen und Lösen der Spanneinrichtung zu benutzen. Eine in diesem Sinne zum Betätigen der Stellstange im Stillstand der Spanneinrichtung erfindungsgemäß bevorzugt geeignete Anordnung ist dadurch gekennzeichnet, daß die Spanneinrichtung an der Arbeitsspindel oder an einem Teil der Arbeitsspindel, der sowohl das Bewegungswandlungssystem als auch ein zum Antrieb der Arbeitsspindel dienendes Antriebsglied trägt, drehbar angeschlossen und in Drehrichtung ein- und auskuppelbar ist, und daß die ausgekuppelte Spanneinrichtung und mindestens eines der Stellräder gegen Verdrehen feststellbar sind. Ist die Spanneinrichtung ausgekuppelt und ebenso wie eines der Stellräder gegen Verdrehen gesichert, kann der Antriebsmotors für die Arbeitsspindel über die Arbeitsspindel insgesamt, bzw. ihren das Bewegungswandlungssystem tragenden Spindelteil das Bewegungswandlungssystem in Bezug auf die stillstehende Spanneinrichtung verdrehen und dadurch die Stellstange axial in der einen oder anderen Richtung beaufschlagen und verstellen, wozu selbstverständlich Voraussetzung ist, daß - wie früher schon erwähnt, - die Stellstange frei drehbar mit dem Ausgangsglied des Bewegungswandlungssystems verbunden ist. Zum Feststellen der Stellräder kann die Bremseinrichtung Verwendung finden, wenn sie einen dazu geeigneten Aufbau besitzt, wie es bei einer mechanischen Reibbremse der Fall ist. Andernfalls muß zusätzlich zur Bremseinrichtung eine geeignete Verriegelungseinrichtung vorgesehen werden.

Im einzelnen bestehen bezüglich der Lage der Kupplung für die Antriebsglied und der Spanneinrichtung verschiedene Ausführungsmöglichkeiten:

In einer ersten bevorzugten Ausführungsform ist die Spanneinrichtung drehbar an der Arbeitsspindel gelagert und eine Kupplungseinrichtung vorgesehen, die im eingekuppelten Zustand die Spanneinrichtung drehfest mit der Arbeitsspindel verbindet. Hier wird das Bewegungswandlungssystem bei stillstehender Spanneinrichtung durch die Arbeitsspindel insgesamt in Bewegung gesetzt. Für die Feststellung der Spanneinrichtung bei offener Kupplungseinrichtung ist dann zweckmäßigerweise ein an der drehfest mit der Spanneinrichtung verbundenen Stellstange zum Eingriff kommendes Verriegelungsglied vorgesehen. Statt einer solchen Verriegelung der Stellstange kann die Anordnung auch so getroffen werden, daß die Kupplungseinrichtung ein zwischen der Spanneinrichtung und der Arbeitsspindel axial verschiebbares, mit der Spanneinrichtung drehfest verbundenes Kupplungsstück aufweist, das unter der Kraft einer Kupplungsfeder in an der Arbeitsspindel eingekuppelter Stellung steht, und daß ein gegen Bewegung in Umfangsrichtung der Arbeitsspindel gesichertes Stellglied vorgesehen ist, das gegen das Kupplungsstück vorstellbar ist, wobei es das Kupplungsstück gegen die Kraft der Kupplungsfeder aus dem eingekuppelten Zustand an der Arbeitsspindel löst und zugleich gegen Drehung verriegelt. In diesem Fall empfiehlt es sich, daß das Kupplungsstück zwischen zwei Kupplungsflanschen angeordnet und geführt ist, die drehbar und axial unverschiebbar aneinander gelagert sind und von welchen der eine Kupplungsflansch mit der Spanneinrichtung und der andere Kupplungsflansch mit der Arbeitsspindel jeweils fest verbunden ist. - Ersichtlich besitzt diese erste Ausführungsform den Vorteil, daß sie lediglich Maßnahmen bei der Anordnung der Spanneinrichtung am Kopf der Arbeitsspindel erfordert, die ohne weiteres verwirklicht werden können, ohne die Drehmaschine oder die Spanneinrichtung selbst nennenswert ändern zu müssen.

In einer zweiten bevorzugten Ausführungsform kann dagegen die Spanneinrichtung in üblicher Weise fest an den Kopf der Arbeitsspindel angeschlossen werden, jedoch sind Änderungen an der Drehmaschine nötig. Diese Ausführungsform ist dadurch gekennzeichnet, daß die Arbeitsspindel in einen die Spanneinrichtung fest tragenden Spindelabschnitt und einen fest das Bewegungswandlungssystem und das Antriebsglied für die Arbeitsspindel tragenden Spindelabschnitt unterteilt ist, und daß beide gegeneinander verdrehbaren Spindelabschnitte durch eine Kupplungseinrichtung verbunden sind und der die Spanneinrichtung tragende Spindelabschnitt im ausgekuppelten Zustand der Kupplungseinrichtung gegen Verdrehen feststellbar ist. Hier erfolgt die Betätigung des Bewegungswandlungssystems nur über den es tragenden Spindelabschnitt, während der die Spanneinrichtung tragende Spindelabschnitt still steht. Konstruktiv empfiehlt es sich dabei, daß der das Antriebsglied für die Arbeitsspindel und das Bewegungswandlungssystem tragende Spindelabschnitt an dem die Spanneinrichtung tragenden Spindelabschnitt drehbar gelagert ist, der drehfest und axial verschiebbar ein Kupplungsglied trägt, das mit dem anderen Spindelabschnitt, insbesondere mit dem Antriebsglied, drehfest kuppelbar ist und in seiner ausgekuppelten Stellung gegen Verdrehen verriegelt ist.

Im folgenden wird die Erfindung an in der Zeichnung dargestellten Ausführungsbeispielen näher erläutert; es zeigen:
- Fig. 1: einen Axialschnitt durch eine Vorrichtung nach der Erfindung unter Wiedergabe nur der für das Verständnis der Erfindung wesentlichen Teile, stellenweise in nur schematischer Darstellung,
- Fig. 1a: das gegenüber Fig. 1 vergrößerte Detail der Verbindung von Ausgangsglied und Stellstange in einer gegenüber Fig. 1 leicht geänderten Ausführungsform,
- Fig. 2: eine Stirnansicht der Vorrichtung nach Fig. 1 in Richtung des dort eingetragenen Pfeiles II,
- Fig. 3: eine andere Ausführungsform der Erfindung in einer der Fig. 1 entsprechenden Darstellung,
- Fig. 4: den Schnitt IV-IV in Fig. 3,
- Fig. 5: einen Teil des Gegenstandes der Fig. 3 ohne den Kopf der Arbeitsspindel und ohne Spanneinrichtung in einer bezüglich der Stellräder etwas geänderten Ausführungsform,
- Fig. 6: eine weitere Ausführungsform der erfindungsgemäßen Vorrichtung in einem teilweise nur schematisch dargestelltenAxialschnitt längs der in Fig. 7 eingetragenen Schnittlinie VI-VI,
- Fig. 7: eine Ansicht des Gegenstandes der Fig. 6 in Richtung des dort eingetragenen Pfeiles VII, teilweise im Schnitt,
- Fig. 8: den Schnitt VIII-VIII in Fig. 7,
- Fig. 9: das in den Fig. 6 und 8 mit IX bezeichnete Detail in einer geänderten Ausführungsform,
- Fig.10: die Stirnansicht des Gegenstandes der Fig. 9 in Richtung des dort eingetragenen Pfeiles X,
- Fig.11: eine andere Ausführungsform der erfindungsgemäßen Vorrichtung in einer der Fig. 6 entsprechenden Darstellung, und
- Fig.12: eine nochmals andere Ausführungsform der Vorrichtung nach der Erfindung in einem Axialschnitt entsprechend den Fig. 6 und 11.

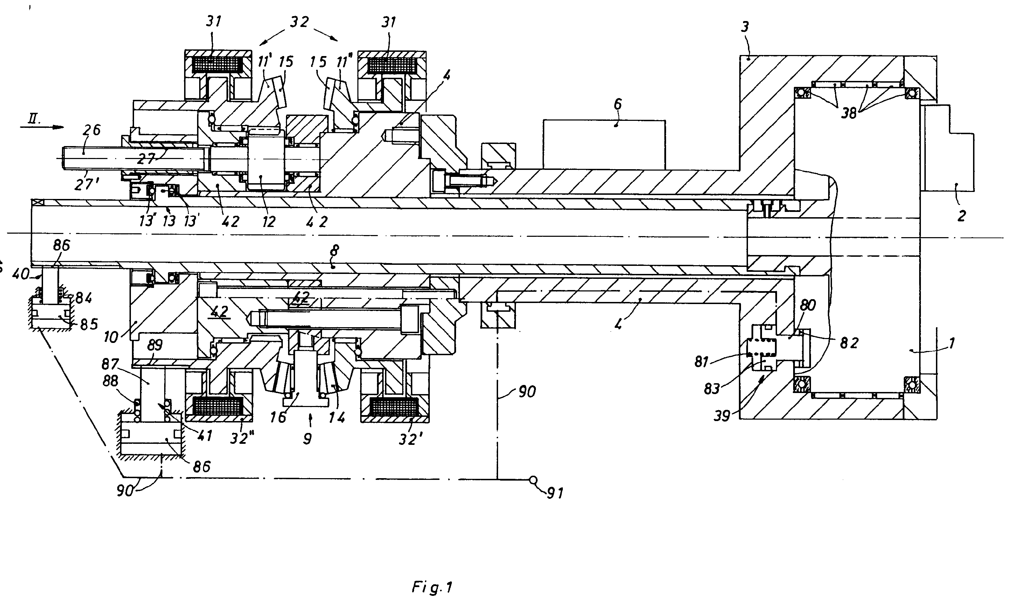

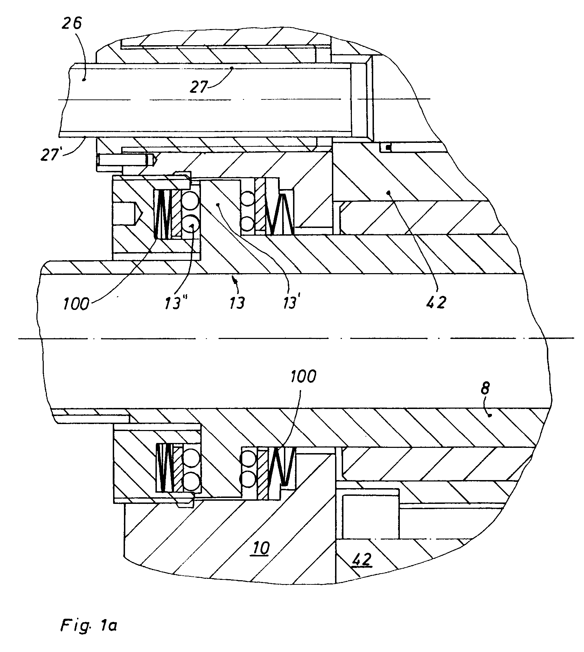

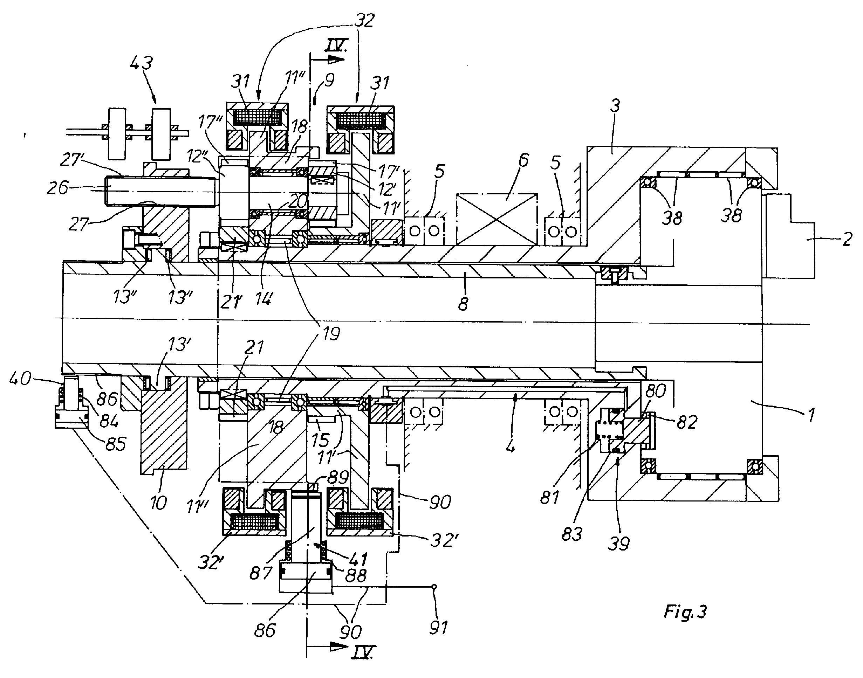

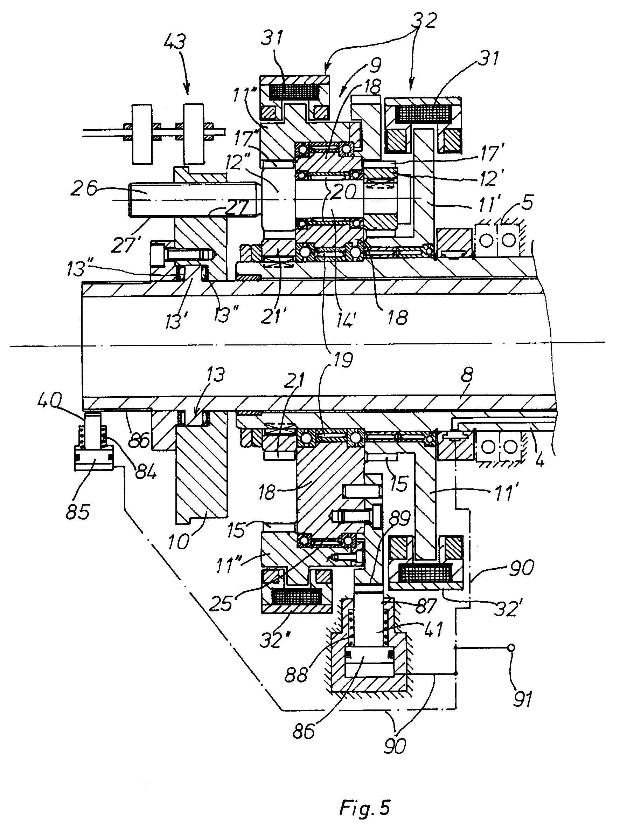

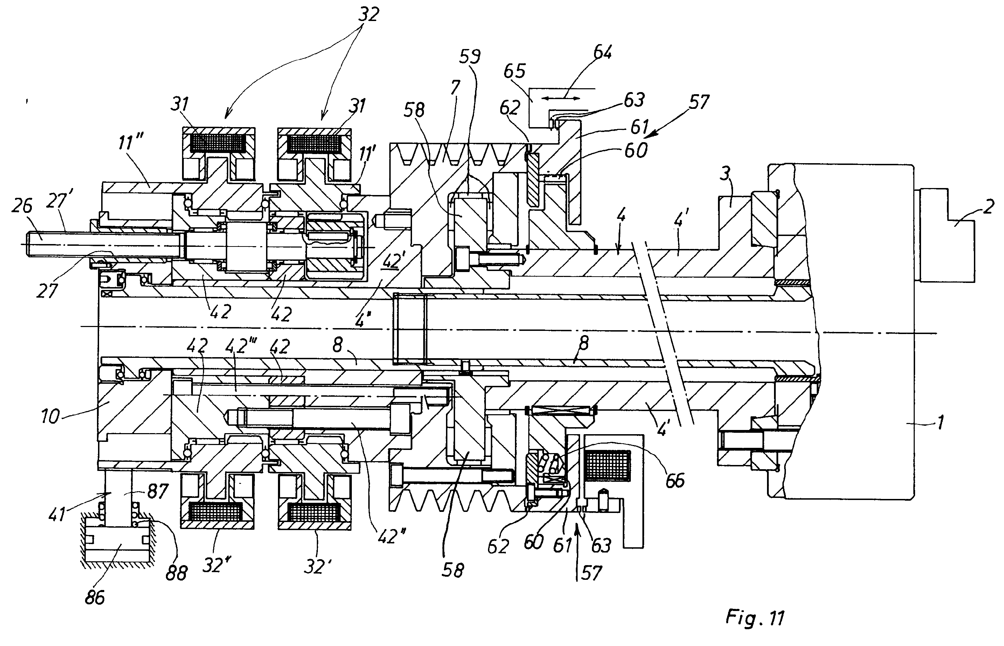

In der Zeichnung ist die Spanneinrichtung 1 ein Spannfutter mit radial verstellbaren Spannbacken als Spannglieder 2, wobei die Spanneinrichtung 1 nur schematisch und von den Spanngliedern 2 nur eine Spannbacke dargestellt ist. Die Spanneinrichtung 1 befindet sich am Kopf 3 der allgemein mit 4 bezeichneten Arbeitsspindel einer im übrigen nicht dargestellten Drehmaschine, wobei die Arbeitsspindel 4 mit nur in den Fig. 3 und 5 angedeuteten Lagern 5 im nicht gezeichneten Spindelkasten der Drehmaschine gelagert und durch einen Motor 6 oder ein beispielsweise in Fig. 11 als Riemenscheibe dargestelltes Antriebsglied 7 in üblicher und daher nicht weiter dargestellter Weise antreibbar ist. In der hohlen Arbeitsspindel 4 ist eine rohrförmige Stellstange 8 angeordnet, durch deren axiale Verstellung bzw. Kraftbeaufschlagung die Spannglieder 2 der Spanneinrichtung 1 betätigt werden können. Die Betätigung der Stellstange 8 erfolgt durch ein an der Arbeitsspindel 4 mitumlaufend angeordnetes, allgemein mit 9 bezeichnetes Bewegungswandlungssystem, das ein die Stellstange 8 axial betätigendes Ausgangsglied 10 und mindestens ein in Bezug auf die Arbeitsspindel 4 drehbar und achsenparallel angeordnetes Eingangsglied 12, 12', 12'' besitzt, das in Triebverbindung mit mindestens einem von zwei Stellrädern 11', 11'' steht, die an der Arbeitsspindel 4 zueinander und zur Arbeitsspindel selbst koaxial und drehbar angeordnet und miteinander gegenläufig gekuppelt sind, so daß die Verdrehung eines der Stellräder 11', 11'' relativ zur Arbeitsspindel 4 mit einer entsprechenden Verdrehung des anderen Stellrades in entgegengesetzter Drehrichtung verbunden ist. Mittels einer allgemein mit 32 bezeichneten Bremseinrichtung können die beiden Stellräder 11' 11'' unabhängig voneinander gebremst werden, wobei die Größe des Bremsmomentes in noch später erläuterter Weise gesteuert werden kann. Wird daher bei umlaufender Arbeitsspindel 4 eines der Stellräder 11', 11'' gebremst, verdreht sich dieses relativ zur Arbeitsspindel 4, was zu einer axialen Verstellung bzw. Beaufschlagung der Stellstange 8 führt. Die Bremsung des jeweils anderen Stellrades 11', 11'' ergibt eine axial entgegengesetzte Verstellung bzw. Beaufschlagung der Stellstange 8, so daß im Ergebnis die Spannglieder 2 der Spanneinrichtung 1 bei laufender Arbeitsspindel 4 allein durch Bremsen des einen oder anderen Stellrads 11', 11'' in sich schließendem oder öffnenden Sinne betätigt werden können, so daß beispielsweise auch Innen- und Außenspannung möglich ist. In der Regel ist die Stellstange 8 in der Spanneinrichtung 1 drehfest angeschlossen. Besteht daher die Möglichkeit, daß sich das Bewegungswandlungssystem 9 mit der Arbeitsspindel 4 relativ gegenüber der Spanneinrichtung 1 und der Stellstange 8 verdrehen kann, wie dies noch im einzelnen erläutert wird, muß das Ausgangsglied 10 des Bewegungswandlungssystems mit der Stellstange 8 so verbunden sein, daß sich das Ausgangsglied 10 gegenüber der Stellstange 8 frei verdrehen kann, die axial kraftschlüssige Verbindung 13 zwischen der Stellstange 8 und dem Ausgangsglied 10 aber erhalten bleibt. In den Ausführungsbeispielen ist dazu die Stellstange 8 mit einem Ringbund 13' versehen, an dem über Axiallager 13'' das Ausgangsglied 10 des Bewegungswandlungssystems 9 drehbar geführt und abgestützt ist. Außer in Fig. 1a ist diese Abstützung im wesentlichen formschlüssig ausgebildet. In Fig. 1a sind dagegen zwischen dem Ausgangsglied 10 und der Stellstange 8 Tellerfedern 100 angeordnet, die das Ausgangsglied 10 axial in beiden Richtungen an der Stellstange 8 abstützen, so daß gegen die Kraft dieser Tellerfedern 100 eine axiale Relativverstellung zwischen dem Ausgangsglied 10 und der Stellstange 8 möglich ist. Diese Relativverstellung ist jedoch nur innerhalb vorgegebener Grenzen möglich, die im Ausführungsbeispiel dadurch gegeben sind, daß bei vollständig zusammengedrückten Tellerfedern 100 der Ringbund 13' über eines der Axiallager 13'' und die Tellerfedern 100 an der letztere abstützenden Ringschulter des Ausgangsgliedes 10 zum starren Anschlag kommen.

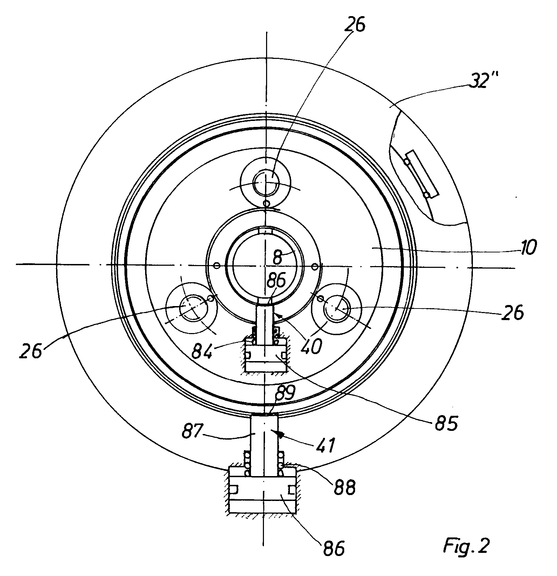

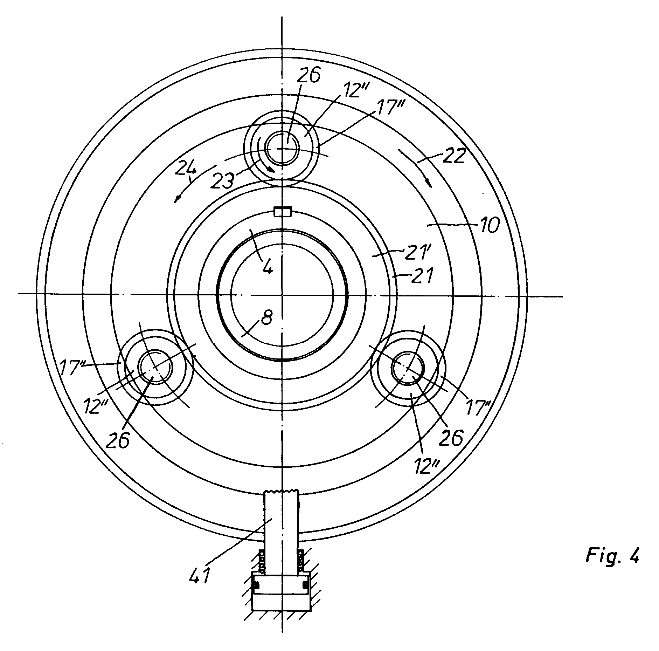

Zu der schon erwähnte gegenläufigen Kopplung beider Stellräder 11', 11'' ist mindestens ein Getriebeglied vorgesehen, das mitumlaufend an der Arbeitsspindel 4 angeordnet ist. Dieses Getriebeglied steht in Triebverbindung mit den Stellrädern 11', 11'' und ist an der Arbeitsspindel 4 in deren Umfangsrichtung so abgestützt, daß eine Relativverdrehung des einen Stellrades 11' in Bezug auf die Arbeitsspindel 4 eine entgegengerichtete Relativverdrehung des anderen Stellrades 11'' ergibt. Dies geschieht auf einfachste Weise dadurch, daß das Getriebeglied von einem oder mehreren miteinander kämmenden Ritzeln 14 gebildet ist, die an der Arbeitsspindel 4 gelagert sind und mit an den Stellrädern 11', 11'' jeweils vorgesehenen Zahnkränzen 15 im Eingriff stehen. Im Ausführungsbeispiel nach den Fig. 1 und 2 ist das Ritzel 14 einzeln oder zu mehreren über den Umfang der Arbeitsspindel 4 verteilt angeordnet, mit jeweils einem Achszapfen 16 radial an der Arbeitsspindel 4 gelagert und als Kegelritzel ausgebildet, das in die entsprechend kegelig gestalteten Zahnkränze 15 an den beiden Stellrädern 11', 11'' eingreift. Im Ausführungsbeispiel nach den Fig. 3 bis 5 ist das Getriebeglied von einem oder mehreren, je zwei Ritzel 17', 17'' drehfest tragenden Achszapfen 14' gebildet, die über Wälzlager 20 drehbar in einem seinerseits ebenfalls über ein Wälzlager 19 drehbar an der Arbeitsspindel 4 angeordneten Ring 18 gelagert sind. Jeweils das eine Ritzel 17' der Achszapfen 14' greift in den Zahnkranz 15 am Stellrad 11' und das andere Ritzel 17'' in einem an der Arbeitsspindel 4 festen Zahnkranz 21, der an einem drehfest und axial unverschieblich an der Arbeitsspindel 4 angeordneten Ring 21' ausgebildet ist. Wird daher das Stellrad 11' in Richtung des in Fig. 4 eingetragenen Pfeiles 22 gegenüber der Arbeitsspindel 4 gedreht, erfährt auch der Achszapfen 14' in Folge seiner Abstützung an dem an der Arbeitsspindel 4 festen Zahnkranz 21 eine Drehung in Richtung des Pfeiles 23, was insgesamt eine Drehung des Ringes 18 in Richtung des Pfeiles 24 ergibt, so daß im Ergebnis die Drehung des Stellrades 11' entgegengesetzt der des Ringes 18 ist. Dieser Ring kann daher unmittelbar das zweite Stellrad 11'' bilden, wie dies in Fig. 3 der Fall ist. Es besteht aber auch die in Fig. 5 dargestellte Möglichkeit, das zweite Stellrad 11'' zusätzlich zu diesem Ring 18 vorzusehen, wobei dieses zweite Stellrad 11'' seinerseits mit einem Lager 25 drehbar auf dem Ring 18 gelagert und mit einem eigenen Zahnkranz 15 in das Ritzel 17'' greift, das mit dem an der Arbeitsspindel 4 festen Zahnkranz 21 im Eingriff steht.

Das Bewegungswandlungssystem 9 besitzt in allen Ausführungsbeispielen mehrere über den Umfang der Arbeitsspindel 4 verteilt und in Bezug auf die Arbeitsspindel 4 achsenparallel und exzentrisch angeordnete Spanngewindespindeln 26, 26', 26'', die drehbar und axial unverschiebbar gelagert sind. Mit ihren Spanngewinde 27' laufen diese Spanngewindespindeln 26, 26', 26'' in Gewindeaufnahmen 27, die im Ausgangsglied 10 des Bewegungswandlungssystems 9 vorgesehen sind. Über die Eingangsglieder 12, 12', 12'' des Bewegungswandlungssystems 9 stehen die Spanngewindespindeln 26, 26', 26'' in Drehrichtung mit mindestens einem der Stellräder 11', 11'' in Triebverbindung. Außerdem sind die Spanngewindespindeln 26, 26 an der Arbeitsspindel 4 in deren Umfangsrichtung so abgestützt, daß eine Relativverdrehung der Arbeitsspindel 4 gegenüber dem mit der Spanngewindespindel 26, 26', 26'' in Triebverbindung stehenden Stellrad 11', 11'' eine Verdrehung der Spanngewindespindel um die eigene Achse ergibt.

Die Spanngewindespindeln 26 können unabhängig von und zusätzlich zu den die gegenläufige Kopplung der Stellräder 11', 11'' bewirkenden Getriebegliedern 14 vorgesehen sein, wie im Fall der Fig. 1 und 2. Bei allen anderen Ausführungsbeispielen sind dagegen die Spanngewindespindeln 26, 26', 26'' zugleich so ausgebildet und angeordnet, daß sie die Funktion des die beiden Stellräder 11', 11'' gegenläufig koppelnden Getriebegliedes 14', 14'' mit erfüllen.

So bilden in den Ausführungsbeispielen nach den Fig. 3 bis 5 die Spanngewindespindeln 26 zugleich die die Ritzel 17', 17'' tragenden Achszapfen 14'. Für die Betätigung des Bewegungswandlungssystems 9 durch Bremsen des Stellrads 11' bildet dann im Fall beispielsweise der Fig. 5 das Ritzel 17' das Eingangsglied 12' des Bewegungswandlungssystems, im Fall einer Bremsung des Stellrades 11'' dagegen das Ritzel 17''.

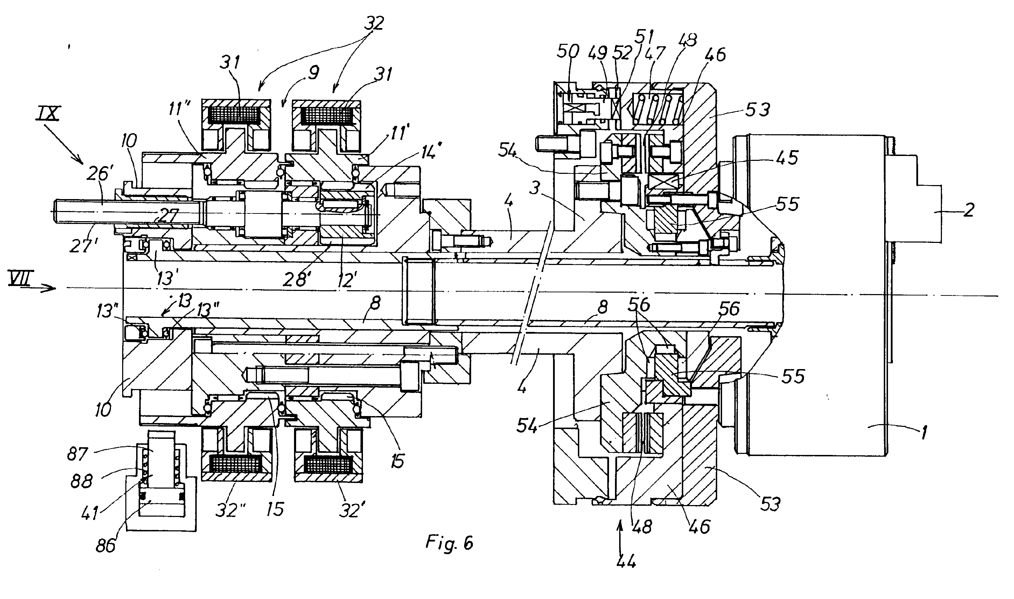

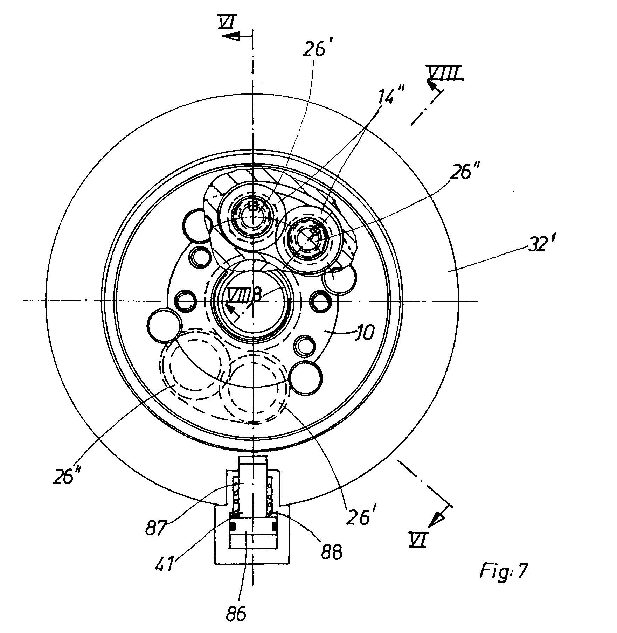

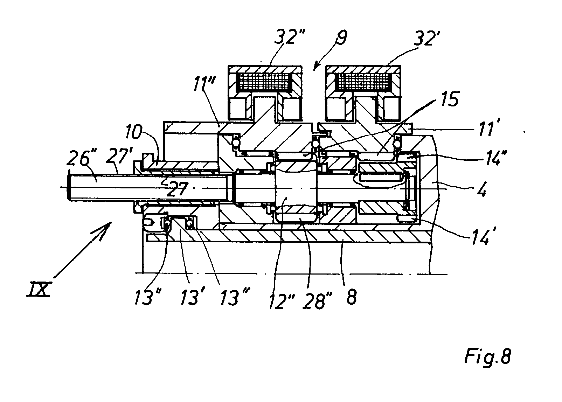

Die Fig. 6 bis 12 zeigen bezüglich des Bewegungswandlungssystems und seiner Betätigung im wesentlichen übereinstimmende Ausführungsbeispiele, bei denen die an der Arbeitsspindel 4 in Umfangsrichtung fest angeordneten Spanngewindespindeln 26', 26'' paarweise vorgesehen sind, wobei die Zeichnung den Fall von zwei solcher Spindelpaare zeigt, die sich diametral zur Arbeitsspindel 4 gegenüberliegend angeordnet sind. Jede dieser Spanngewindespindeln 26', 26'' ist mit einem eigenen Zahnritzel 28', 28'' als Eingangsglied 12', 12'' für das Bewegungswandlungssystem 9 ausgestattet, wobei die in jedem Paar erste Spanngewindespindel 26' mit ihrem Ritzel 28' in den Zahnkranz 15 des einen Stellrads 11' und die zweite Spanngewindespindel 26'' dieses Spindelpaares mit ihrem Ritzel 28'' in den Zahnkranz 15 des anderen Stellrades 11'' greift. Die beiden Spanngewindespindeln 26', 26'' jedes Spindelpaares stehen im übrigen über eine weitere Ritzelverbindung 14'' miteinander gegenläufig im Eingriff, so daß sich die beiden Spanngewindespindeln 26', 26'' jedes Spindelpaares immer gegenläufig drehen und durch ihre Kupplung über die Ritzel 28', 28'' mit den Stellrädern 11', 11'' die entsprechende gegenläufige Verdrehung auch der Stellräder 11', 11'' ergeben. Damit die gegenläufige Drehung der Spanngewindespindeln 26', 26'' jedes Spindelpaares die gleiche axiale Verstellung des Ausgangsglied 10 ergibt, sind an beiden Spanngewindespindeln 26', 26'' die Spanngewinde 27' mit entgegengesetztem Gewindesinn versehen.

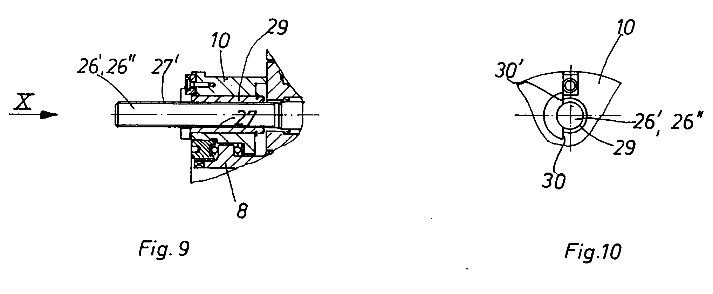

In den Fig. 9 und 10 ist der Fall dargestellt, daß die Gewindeaufnahmen 27 für die Spanngewindespindeln 26', 26'' in Gewindebuchsen 29 ausgebildet sind, die im Ausgangsglied 10 zwischen zwei Anschlägen 30, 30' begrenzt verdrehbar, axial aber unverschiebbar gelagert sind. Wird daher eines der Stellräder 11', 11'' gebremst, können sich die Spanngewindespindeln 26',26'' einschließlich ihrer Gewindebuchsen 29 zunächst frei drehen, bis die Gewindebuchse 29 durch die Anschläge 30, 30' aufgehalten wird. Dies erzeugt eine Schlagwirkung im Gewindesitz 27, 27', die zum Lösen des Gewindesitzes führt, auch wenn die Spanngewindespindeln 26', 26'' in den Gewindeaufnahmen 27 durch einen vorhergegangenen Spannvorgang sehr fest sitzen sollten.

Die Bremseinrichtung 32 ist in allen Ausführungsbeispielen für jedes Stellrad 11', 11'' als eine als Bremse arbeitende Induktionsmaschine mit dem jeweiligen Stellrad als Läufer und einem das Stellrad umgebenden Statorring 32', 32'' mit einer Erregerwicklung 31 ausgebildet, in der die Größe des Erregerstroms und damit die Größe des auf das Stellrad 11', 11'' ausgeübten Bremsmoments steuerbar ist. Im einfachsten Fall ist, wie in den Ausführungsbeispielen, die Induktionsmaschine als Wirbelstrombremse ausgebildet. Im übrigen kann die Bremseinrichtung 32 eine Meßeinrichtung für die Größe des auf die Stellräder 11', 11'' ausgeübten Bremsmoments aufweisen, die zweckmäßigerweise im Zusammenhang mit den Statorringen 32', 32'' ausgebildet werden kann, was aber in der Zeichnung nicht näher dargestellt ist, da die Anordnung und Halterung der Statorringe 32', 32'' im Maschinenrahmen nicht näher gezeigt ist.

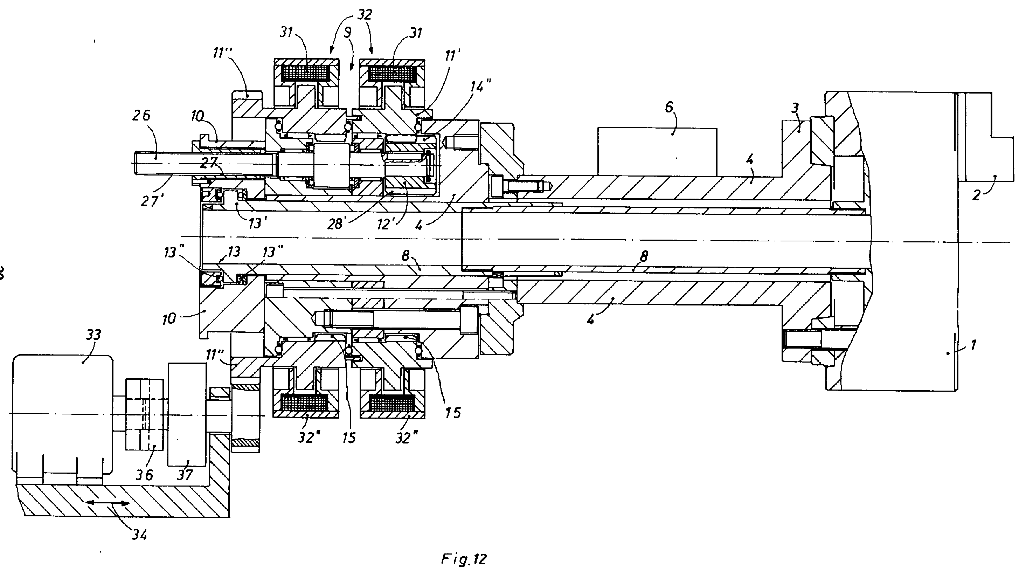

Die Bremsung der Stellräder 11', 11'' durch die Bremseinrichtung 32 ermöglicht die Betätigung der Stellstange 8 nur bei laufender Arbeitsspindel 4. Um auch im Stillstand der Spanneinrichtung 1 diese schließen und öffnen bzw. spannen und lösen zu können, kann entsprechend dem Ausführungsbeispiel in Fig. 12 bei fest mit dem Kopf 3 der Arbeitsspindel 4 verbundener Spanneinrichtung 1 ein stationär angeordneter Stellmotor 33 vorgesehen sein, der in Richtung des Doppelpfeiles 34 verschiebbar und dessen Abtriebsglied 35 dadurch im Stillstand der Arbeitsspindel 4 am Stellrad 11' in dessen Drehrichtung ein- und ausgekuppelt werden kann, wobei durch Reversieren der Drehrichtung dieses Stellmotors 30 die Stellstange 8 axial in der einen oder anderen Richtung betätigt werden kann. Mit 36 ist eine zusätzliche Kupplung, mit 37 ein Getriebeblock bezeichnet. - In allen übrigen Ausführungsbeispielen ist dagegen die Anordnung so getroffen, daß mit Hilfe des für die Arbeitsspindel 4 vorgesehenen Antriebs 6, 7 die Spanneinrichtung 1 auch in deren Stillstand betätigt werden kann, so daß es keines zusätzlichen Stellmotors wie in Fig. 12 bedarf. Dazu ist die Spanneinrichtung für sich mit dem Antrieb der Arbeitsspindel, also dem Antriebsmotor 6 in den Fig. 3 bis 5 oder der Riemenscheibe 7 in den Fig. 6 bis 11, jeweils in Drehrichtung kuppelbar. Außerdem ist die jeweils ausgekuppelte Spanneinrichtung 1 ebenso wie mindestens eines der Stellräder 11', 11'' gegen Verdrehen feststellbar.

Im einzelnen ist dazu im Ausführungsbeispiel nach den Fig. 1 und 3 die Spanneinrichtung 1 über Lager 38 drehbar und axial unverschiebbar am Kopf 3 der Arbeitsspindel 4 gelagert und eine Kupplungseinrichtung 39 vorgesehen, die in ihrem in der Zeichnung dargestellten eingekuppelten Zustand die Spanneinrichtung 1 drehfest mit der Arbeitsspindel 4 verbindet. Diese Kupplungseinrichtung 39 besitzt ein Kupplungsglied 80, das unter der Wirkung einer Kupplungsfeder 81 in eine Kupplungsaufnahme 82 an der Spanneinrichtung 1 greift. Das Kupplungsglied 80 ist axial verstellbar am Kopf 3 der Arbeitsspindel 4 geführt und kann mit Hilfe eines pneumatisch, betätigbaren Stellkolbens 83 gegen die Kraft der Kupplungsfeder 81 aus der eingekuppelten Stellung gelöst werden. Für die Feststellung der Spanneinrichtung 1 bei offener Kupplungseinrichtung 39 dient ein an der drehfest mit der Spanneinrichtung 1 verbundenen Stellstange 8 zum Eingriff kommendes Verriegelungsglied 40, das durch eine Kupplungsfeder 84 im ausgekuppelten Zustand gehalten. Es ist in Bezug auf die Stellstange 8 radial verschiebbar in einem nicht dargestellten Teil des Maschinengestells geführt und durch einen pneumatisch betätigbaren Stellkolben 85 gegen die Kraft dar Kupplungsfeder 84 in eine Kupplungsaufnahme 86 an der Stellstange 8 verschiebbar. Für die Feststellung eines der beiden Stellräder 11', 11'' dient eine weitere Verriegelungseinrichtung 41, die entweder direkt an einem der Stellräder 11', 11'' oder, wie im Ausführungsbeispiel nach den Fig. 3 und 5 an dem die Achszapfen 14' bzw. Spanngewindespindeln 26 lagernden Ring 18 zum Eingriff kommt. Die Verriegelungseinrichtungs 41 besitzt einen einfalls pneumatisch betätigbaren Stellkolben 86, der radial zur Arbeitsspindel 4 ein verriegelungsglied 87 betätigt, das in einem wiederum nicht dargestellten Teil des Maschinengestells verschiebbar geführt ist. Eine Kupplungsfeder 88 hält das Verriegelungsglied 87 außer Eingriff. Wird der Stellkolben 86 betätigt, greift das Verriegelungsglied 87 in eine zugeordnete Verriegelungsaufnahme 89 am Ring 18 oder an einem der Stellräder 11', 11''.

Die Kupplungseinrichtung 39, das Verriegelungsglied 40 und die Verriegelungseinrichtung 41 können gemeinsam über Pneumatikleitungen aus einem nur schematisch angedeuteten Pneumatikanschluß 91 angesteuert werden.

Ist im Ergebnis die Spanneinrichtung 1 von der Arbeitspindel 4 durch die offene Kupplungseinrichtung 39 abgekoppelt und ebenso wie eines der beiden Stellräder 11', 11'' oder der Ring 18 gegen Drehung gesichert, kann durch den Antrieb der Arbeitsspindel 4 diese verdreht werden, wobei sich das Bewegungswandlungssystem 9 entsprechend mitdreht, weil, wie in Fig. 1, die Spanngewindespindeln 26 unmittelbar in einem an der Arbeitsspindel 4 festen und Teil derselben bildenden Ansatzl 42 gelagert sind oder, wie in Fig. 3 oder 5, über den an der Arbeitsspindel 4 festen Zahnkranz 21 mit der Arbeitsspindel 4 im Eingriff stehen. In jedem Fall ergibt dies eine Drehung der Spanngewindespindeln 26 um ihre Achse mit der Folge, daß das Ausgangsglied 10 und mit ihm die Stellstange 8 axial betätigt werden. Die dabei entstehende axiale Verstellung kann durch geeignete Stellungsmelder erfaßt werden, wie sie beispielsweise in den Fig. 3 und 5 bei 43 angedeutet sind.

Die Fig. 6 zeigt ein Ausführungsbeispiel, bei der die allgemein mit 44 bezeichnete Kupplungseinrichtung ein zwischen der Spanneinrichtung 1 und der Arbeitsspindel 4 axial verschiebbares, mit der Spanneinrichtung 1 über die Keilanordnung 45 drehfest verbundenes Kupplungsstück 46 aufweist, das unter der Kraft einer Kupplungsfeder 47 über eine Hirth-Verzahnung 48 in an der Arbeitsspindel 4 eingekuppelter Stellung steht, wobei in Fig. 6 allerdings der ausgekuppelte Zustand dargestellt ist. Ein gegen Bewegung in Umfangsrichtung der Arbeitsspindel 4 gesichertes, am Maschinengestell festes Stellglied 49 ist gegen das Kupplungsstück 46 mittels einer hydraulisches Zylinder-Kolbenanordnung 50 vorstellbar, wobei dieses Stellglied 49 das Kupplungsstück 46 gegen die Kraft der Kupplungsfeder 47 aus der Hirth-Verzahnung 48, also aus dem eingekuppelten Zustand an der Arbeitsspindel 4 löst und es zugleich gegen Verdrehung um die Achse der Arbeitsspindel 4 verriegelt, wozu das Stellglied 49 ein Verriegelungsstück 51 besitzt, das in eine entsprechende Verriegelungsaufnahme 52 in eine entsprechende Kupplungsaufnahme 52 am Kupplungsstück 46 greift. Im einzelnen ist das Kupplungsstück 46 zwischen zwei Kupplungsflanschen 53, 54 angeordnet und geführt, die drehbar und axial unverschiebbar aneinander gelagert sind, wozu der Kupplungsflansch 53 einen Lagerring 55 aufweist, an dem der andere Kupplungsflansch 54 radial und axial über die Wälzlager 56 geführt und abgestützt ist. Der eine Kupplungsflansch 53, an dem Kupplungsstück 46 unverdrehbar und axial verschiebbar geführt ist, ist mit der Spanneinrichtung 1 und der andere Kupplungsflansch 54 mit der Arbeitsspindel 4 jeweils fest verbunden. Auch hier dient im übrigen eine Verriegelungsvorrichtung 41 zum Sichern eines der beiden Stellräder 11', 11'' gegen Verdrehen, wenn die Spanneinrichtung von der Arbeitsspindel 4 abgekuppelt und gegen Drehen festgesetzt ist. Wird dann die Arbeitsspindel 4 angetrieben, erfolgt, wie schon früher erläutert, die Mitnahme des des Bewegungswandlungssystems 9 mit entsprechender Axialverstellung der Stellstange 8 bei ruhender Spanneinrichtung 1.

In Fig. 11 ist die Arbeitsspindel 4 in einen die Spanneinrichtung 1 fest tragenden vorderen, im Spindelkasten der Drehmaschine gelagerten Spindelabschnitt 4' 4' und einen fest das Bewegungswandlungssystem 9 und das Antriebsglied 7 für die Arbeitsspindel 4 tragenden hinteren Spindelabschnitt 4'' unterteilt, der von den Bauteilen 42, 42' gebildet ist, die durch die Schrauben 42'' unter sich und durch die Schrauben 42‴ mit der das Antreibsglied 7 bildenden Riemenscheibe verbunden sind. Beide Spindelabschnitte 4', 4'' sind gegeneinander verdrehbar und durch eine allgemein mit 57 bezeichnete Kupplungseinrichtung verbunden, wobei im ausgekuppelten Zustand der Kupplungseinrichtung 57 der die Spanneinrichtung 1 tragende vordere Spindelabschnitt 4' gegen Verdrehen festgestellt werden kann. Im einzelnen ist der das Antriebsglied 7 und das Bewegungswandlungssystem 9 tragende hintere Spindelabschnitt 4'' an dem die Spanneinrichtung 1 tragenden vorderen Abschnitt 4' drehbar gelagert, der dazu einen Lagerflansch 58 aufweist, an dem das Antriebsglied 7, das fest mit dem hinteren, das Bewegungswandlungssystem 9 tragenden Spindelabschnitt 4'' verbunden ist, über Wälzlager 59 axial und radial geführt ist. Der vordere Spindelabschnitt 4' trägt über eine Keilverbindung 60 drehfest und axial verschiebbar ein Kupplungsglied 61, das mit dem Antriebsglied 7 und damit dem hinteren Spindelabschnitt 4'' drehfest kuppelbar und in seiner ausgekuppelten Stellung gegen Verdrehen verriegelt ist. Die Kupplung des Kupplungsgliedes 61 mit dem Antriebsglied 7 erfolgt über die Kupplungsverzahnung 62, die Verriegelung des Kupplungsglieds 61 gegen Verdrehung über die Kupplungsverzahnung 63. Dabei ist in der oberen Hälfte der Fig. 11 die Möglichkeit einer rein mechanisch arbeitenden Kupplung mit einem in Richtung des Doppelpfeiles 64 bewegbaren Kupplungsteiles 65, in der unteren Zeichnungshälfte die Möglichkeit einer elektromagnetisch betätigbaren Kupplung dargestellt. In beiden Fällen befindet sich das Kupplungsglied 61 unter der Wirkung einer Kupplungsfeder 66 im Kupplungseingriff am Antriebsglied 7. Erst durch Betätigen der Kupplung wird das Kupplungsglied 61 gegen die Kraft der Kupplungsfeder 66 in der Fig. 11 nach rechts bis zum Eingriff der Kupplungsverzahnung 63 bewegt, wodurch das Kupplungsglied 61 und im Ergebnis der vordere Spindelabschnitt 4' mit der Spanneinrichtung 1 gegen Verdrehen verriegelt wird. Über den Spindelantrieb und das Antriebsglied 7 kann dann der hintere Spindelabschnitt 4'' in Drehung versetzt werden, was zur entsprechenden Drehung des Bewegungswandlungssystems 9 und zur beabsichtigten Axialverstellung der Stellstange 8 und damit zum Schließen und Öffnen, bzw. Spannen und Lösen der Spanneinrichtung 1 führt.

## Patentansprüche

1. Vorrichtung zur Erzeugung einer Stellkraft für die Spannglieder (2) einer Spanneinrichtung (1), insbesondere zum Verstellen der Spannbacken eines Spannfutters oder der von ihnen ausgeübten Spannkraft, mit einer die Spanneinrichtung (1) tragenden, zum Umlauf antreibbaren Arbeitsspindel (4) einer Drehmaschine und einer in der hohlen Arbeitsspindel (4) axial verstellbar angeordneten Stellstange (8) für die Betätigung der Spannglieder (2), wobei ein an der Arbeitsspindel (4) mitumlaufend angeordnetes Bewegungswandlungssystem (9) ein die Stellstange (8) axial betätigendes Ausgangsglied (10) und mindestens ein in Bezug auf die Arbeitsspindel (4) drehbar und achsenparallel angeordnetes Eingangsglied (12, 12', 12'') besitzt, das in Triebverbindung mit mindestens einem von zwei Stellrädern (11', 11'') steht, die an der Arbeitsspindel (4) zueinander und zur Arbeitsspindel selbst koaxial und drehbar angeordnet und miteinander gegenläufig gekoppelt sind, wobei eine Bremseinrichtung (32) vorgesehen ist, mit der die Stellräder (11', 11'') unabhängig voneinander bremsbar sind, wobei die Größe des Bremsmoments steuerbar ist.

2. Vorrichtung nach Anspruch 1, dadurch gekennzeichnet, daß zwischen dem Ausgangsglied (10) des Bewegungswandlungssystems (9) und der Stellstange (8) eine die freie Verdrehung beider gegeneinander ermöglichende, axial kraftschlüssige Verbindungseinrichtung (13) eingeschaltet ist.

3. Vorrichtung nach Anspruch 1 oder 2, dadurch gekennzeichnet, daß zur gegenläufigen Kopplung beider Stellräder (11', 11'') mindestens ein an der Arbeitsspindel (4) mitumlaufend angeordnetes Getriebeglied (14, 14', 14'') vorgesehen ist, das in Triebverbindung mit den Stellrädern (11', 11'') steht und an der Arbeitsspindel (4) in deren Umfangsrichtung so abgestützt ist, daß eine Relativverdrehung des einen Stellrades in Bezug auf die Arbeitsspindel (4) eine entgegengerichtete Relativverdrehung des anderen Stellrades ergibt.

4. Vorrichtung nach Anspruch 3, dadurch gekennzeichnet, daß das Getriebeglied von einem oder mehreren miteinander kämmenden Ritzeln (14) gebildet ist, die an der Arbeitsspindel (4) gelagert sind und mit an den Stellrädern (11', 11'') jeweils vorgesehenen Zahnkränzen (15) im Eingriff stehen.

5. Vorrichtung nach Anspruch 3, dadurch gekennzeichnet, daß das Getriebeglied von einem oder mehreren, je zwei Ritzel (17', 17'') drehfest tragenden Achszapfen (14') gebildet ist, die drehbar in einem seinerseits ebenfalls drehbar an der Arbeitsspindel (4) angeordneten Ring (18) gelagert sind, wobei jeweils das eine Ritzel (17') der Achszapfen (14') in einen Zahnkranz (15) an einem der Stellräder (11') und das andere Ritzel (17'') in einen an der Arbeitsspindel (4) festen Zahnkranz (21) greift.

6. Vorrichtung nach Anspruch 5, dadurch gekennzeichnet, daß das zweite Stellrad (11'') unmittelbar von dem die Achszapfen (14') lagernden Ring (18) gebildet ist.

7. Vorrichtung nach einem der Ansprüche 1 bis 6, dadurch gekennzeichnet, daß das Bewegungswandlungssystem (9) mindestens eine in Bezug auf die Arbeitsspindel (4) achsenparallel und exzentrisch angeordnete und drehbar und axial unverschiebbar gelagerte Spanngewindespindel (26, 26', 26'') aufweist, die mit ihrem Spanngewinde (27') in einer im Ausgangsglied (10) des Bewegungswandlungssystems (9) vorgesehenen Gewindeaufnahme (27) läuft, ferner über das Eingangsglied (12') des Bewegungswandlungssystems (9) in Drehrichtung mit mindestens einem der Stellräder (11', 11'') in Triebverbindung steht und an der Arbeitsspindel (4) in deren Umfangsrichtung so abgestützt ist, daß eine Relativverdrehung der Arbeitsspindel (4) gegenüber dem mit der Spanngewindespindel (26, 26', 26'') in Triebverbindung stehenden Stellrad (11', 11'') eine Verdrehung der Spanngewindespindel um die eigene Achse ergibt.

8. Vorrichtung nach Anspruch 7, dadurch gekennzeichnet, daß die Spanngewindespindel (26, 26', 26'') mehrfach vorgesehen ist und die Spanngewindespindeln über den Umfang der Arbeitsspindel (4) verteilt sind.

9. Vorrichtung nach Anspruch 7 oder 8, dadurch gekennzeichnet, daß die Spanngewindespindel (26, 26', 26'') ganz oder teilweise das Getriebeglied (14', 14'') bildet.

10. Vorrichtung nach einem der Ansprüche 7 bis 9, dadurch gekennzeichnet, daß die Gewindeaufnahmen (27) für die Spanngewindespindeln (26, 26', 26'') in Gewindebuchsen (29) ausgebildet sind, die im Ausgangsglied (10) zwischen zwei Anschlägen (30, 3) begrenzt verdrehbar und axial unverschiebbar gelagert sind.

11. Vorrichtung nach den Ansprüchen 8 und 9, dadurch gekennzeichnet, daß die an der Arbeitsspindel (4) in Umfangsrichtung fest angeordneten Spanngewindespindeln (26', 26'') paarweise vorgesehen und jeweils mit einem Zahnritzel (28', 28'') als Eingangsglied (12', 12'') für das Bewegungswandlungssystem (9) ausgestattet sind, wobei die erste Spanngewindespindel (26') des Spindelpaares mit ihrem Ritzel (28') in einen Zahnkranz (15) des einen Stellrads (11') und die zweite Spanngewindespindel (26'') das Spindelpaares mit ihrem Ritzel (28'') in einen Zahnkranz (15) des anderen Stellrades (11'') greift, und daß die beiden Spanngewindespindeln (26',26'') des Spindelpaares über eine weitere Ritzelverbindung (14'') miteinander gegenläufig im Eingriff stehen sowie einander entgegengesetzten Gewindesinn ihrer Spanngewinde (27') aufweisen.

12. Vorrichtung nach den Ansprüchen 2, 5 oder 6, und 9, dadurch gekennzeichnet, daß die Spanngewindespindeln (26) die Achszapfen (14') bilden.

13. Vorrichtung nach einem der Ansprüche 1 bis 12, dadurch gekennzeichnet, daß die Bremseinrichtung eine für jedes Stellrad (11', 11'') vorgesehene Reibbremse, insbesondere Backen- oder Axial-(Scheiben-)bremse mit als Bremsscheibe ausgebildetem Stellrad ist.

14. Vorrichtung nach einem der Ansprüche 1 bis 12, dadurch gekennzeichnet, daß die Bremseinrichtung (32) für jedes Stellrad (11', 11'') als eine als Bremse arbeitende Induktionsmaschine mit dem Stellrad als Läufer und einem das Stellrad umgebenden Statorring (32', 32'') mit Erregerwicklung (31) ausgebildet ist, in der die Größe des Erregerstroms steuerbar ist.

15. Vorrichtung nach Anspruch 14, dadurch gekennzeichnet, daß die Induktionsmaschine als Wirbelstrombremse ausgebildet ist.

16. Vorrichtung nach einem der Ansprüche 13 bis 15, dadurch gekennzeichnet, daß die Bremseinrichtung (32) eine Meßeinrichtung für die Größe des auf die Stellräder (11', 11'') ausgeübten Bremsmoments aufweist.

17. Vorrichtung nach einem der Ansprüche 1 bis 16, dadurch gekennzeichnet, daß ein stationär angeordneter Stellmotor (33) vorgesehen ist, dessen Abtriebsglied (35) im Stillstand der Arbeitsspindel (4) an einem der Stellräder (11', 11'') in Drehrichtung ein- und auskuppelbar ist.

18. Vorrichtung nach einem der Ansprüche 1 bis 16, dadurch gekennzeichnet, daß die Spanneinrichtung (1) an der Arbeitsspindel (4) oder an einem Teil (4'') der Arbeitsspindel (4), der sowohl das Bewegungswandlungssystem (9) als auch ein zum Antrieb der Arbeitsspindel dienendes Antriebsglied (7) trägt, drehbar angeschlossen und in Drehrichtung ein- und auskuppelbar ist, und daß die ausgekuppelte Spanneinrichtung (1) und mindestens eines der Stellräder (11', 11'') gegen Verdrehen feststellbar sind.

19. Vorrichtung nach Anspruch 18, dadurch gekennzeichnet, daß die Spanneinrichtung (1) drehbar an der Arbeitsspindel (4) gelagert und eine Kupplungseinrichtung (39, 44) vorgesehen ist, die im eingekuppelten Zustand die Spanneinrichtung (1) drehfest mit der Arbeitsspindel (4) verbindet.

20. Vorrichtung nach Anspruch 19, dadurch gekennzeichnet, daß für die Feststellung der Spanneinrichtung (1) bei offener Kupplungseinrichtung (39) ein an der drehfest mit der Spanneinrichtung (1) verbundenen Stellstange (8) zum Eingriff kommendes Verriegelungsglied (40) vorgesehen ist.

21. Vorrichtung nach Anspruch 19, dadurch gekennzeichnet, daß die Kupplungseinrichtung (44) ein zwischen der Spanneinrichtung (1) und der Arbeitsspindel (4) axial verschiebbares, mit der Spanneinrichtung (1) drehfest verbundenes Kupplungsstück (46) aufweist, das unter der Kraft einer Kupplungsfeder (47) in an der Arbeitsspindel (4) eingekuppelter Stellung steht, und daß ein gegen Bewegung in Umfangsrichtung der Arbeitsspindel (4) gesichertes Stellglied (49) vorgesehen ist, das gegen das Kupplungsstück (46) vorstellbar ist, wobei es das Kupplungsstück (46) gegen die Kraft der Kupplungsfeder (47) aus dem eingekuppelten Zustand an der Arbeitsspindel (4) löst und zugleich gegen Drehung verriegelt.

22. Vorrichtung nach Anspruch 21, dadurch gekennzeichnet, daß das Kupplungsstück (46) zwischen zwei Kupplungsflanschen (53, 54) angeordnet und geführt ist, die drehbar und axial unverschiebbar aneinander gelagert sind und von welchen der eine Kupplungsflansch (53) mit der Spanneinrichtung (1) und der andere Kupplungsflansch (54) mit der Arbeitsspindel (4) jeweils fest verbunden ist.

23. Vorrichtung nach Anspruch 18, dadurch gekennzeichnet, daß die Arbeitsspindel (4) in einen die Spanneinrichtung (1) fest tragenden Spindelabschnitt (4') und einen fest das Bewegungswandlungssystem (9) und das Antriebsglied (7) für die Arbeitsspindel tragenden Spindelabschnitt (4'') unterteilt ist, und daß beide gegeneinander verdrehbaren Spindelabschnitte (4', 4'') durch eine Kupplungseinrichtung (57) verbunden sind und der die Spanneinrichtung (1) tragende Spindelabschnitt (4') im ausgekuppelten Zustand der Kupplungseinrichtung (57) gegen Verdrehen feststellbar ist.

24. Vorrichtung nach Anspruch 23, dadurch gekennzeichnet, daß der das Antriebsglied (7) für die Arbeitsspindel (4) und das Bewegungswandlungssystem (9) tragende Spindelabschnitt (4', 4'') an dem die Spanneinrichtung (1) tragenden Spindelabschnitt (4') drehbar gelagert ist, der drehfest und axial verschiebbar ein Kupplungsglied (61) trägt, das mit dem anderen Spindelabschnitt (4''), insbesondere mit dem Antriebsglied (7), drehfest kuppelbar ist und in seiner ausgekuppelten Stellung gegen Verdrehen verriegelt ist.

25. Vorrichtung nach einem oder mehreren der vorangehenden Ansprüche, dadurch gekennzeichnet, daß zwischen dem Ausgangsglied (10) des Bewegungswandlungssystems (9) und der Stellstange (8) Kraftübertragungsglieder eingeschaltet sind, die innerhalb vorgegebener Grenzen eine axiale Relativverstellung zwischen dem Ausgangsglied (10) und der Stellstange (8) ermöglichen, wobei die Größe der zwischen beiden übertragenen Kraft vom relativen Verstellweg zwichen ihnen abhängt.

26. Vorrichtung nach Anspruch 25, dadurch gekennzeichnet, daß die Kraftübertragungsglieder von Federelementen (100) gebildet sind, welche das Ausgangsglied (10) axial in beiden Richtungen an der Stellstange (8) abstützen.

## Claims

1. A device for producing an adjusting force for the clamping members (2) of a clamping apparatus (1), in particular for adjusting the clamping jaws of a chuck or the clamping force that they apply, comprising a working spindle (4) of a lathe, which can be driven in rotation and which carries the clamping apparatus, and an adjusting rod (8) which is arranged axially displaceably in the hollow working spindle (4) for actuation of the clamping members (2), wherein a motion conversion system (9) which is arranged on the working spindle (4) to rotate therewith has an output member (10) for axially actuating the adjusting rod (8) and at least one input member (12, 12', 12'') which is arranged in axis-parallel relationship and rotatably with respect to the working spindle (4) and which is drivingly connected to at least one of two adjusting wheels (11', 11'') which are arranged rotatably on the working spindle (4) coaxially relative to each other and to the working spindle itself and which are oppositely movably coupled to each other, wherein there is provided a braking means (32) with which the adjusting wheels (11', 11'') can be braked independently of each other, wherein the magnitude of the braking moment is controllable.

2. A device according to claim 1 characterised in that connected between the output member (10) of the motion conversion system (9) and the adjusting rod (8) is an axially force-locking connecting means (13) which permits free rotary movement of the two relative to each other.

3. A device according to claim 1 or claim 2 characterised in that to provide for the oppositely movable coupling of the two adjusting wheels (11', 11'') there is provided at least one transmission member (14, 14', 14'') which is arranged on the working spindle (4) to rotate therewith and which is drivingly connected to the adjusting wheels (11', 11'') and which is so supported on the working spindle (4) in the peripheral direction thereof that a relative rotary movement of the one adjusting wheel in relation to the working spindle (4) produces an oppositely directed relative rotary movement of the other adjusting wheel.

4. A device according to claim 3 characterised in that the transmission member is formed by one or more mutually meshing pinions (14) which are mounted on the working spindle (4) and which are in engagement with gear rings (15) respectively provided on the adjusting wheels (11', 11'').

5. A device according to claim 3 characterised in that the transmission member is formed by one or more trunnions (14') which each non-rotatably carry two pinions (17', 17'') and which are rotatably mounted in a ring (18) which in turn is also arranged rotatably on the working spindle (4), wherein the one pinion (17') of the respective trunnions (14') engages into a gear ring (15) on one of the adjusting wheels (11') and the other pinion (17'') engages into a gear ring (21) which is fixed on the working spindle (4).

6. A device according to claim 5 characterised in that the second adjusting wheel (11'') is formed directly by the ring (18) which supports the trunnions (14').

7. A device according to one of claims 1 to 6 characterised in that the motion conversion system (9) has at least one clamping screwthread spindle (26, 26', 26'') which is arranged eccentrically and in axis-parallel relationship with respect to the working spindle (4) and which is mounted rotatably and axially immovably and which runs with its clamping screwthread (27') in a screwthread receiving means (27) provided in the output member (10) of the motion conversion system (9) and which is also drivingly connected to at least one of the adjusting wheels (11', 11'') by way of the input member (12') of the motion conversion system (9) in the direction of rotation and which is so supported on the working spindle (4) in the peripheral direction thereof that a relative rotary movement of the working spindle (4) relative to the adjusting wheel (11', 11'') which is drivingly connected to the clamping screwthread spindle (26, 26', 26'') produces a rotary movement of the clamping screwthread spindle about its own axis.

8. A device according to claim 7 characterised in that there is a plurality of clamping screwthread spindles (26, 26', 26'') and the clamping screwthread spindles are distributed around the periphery of the working spindle (4).

9. A device according to claim 7 or claim 8 characterised in that the clamping screwthread spindle (26, 26', 26'') entirely or partially forms the transmission member (14', 14'').

10. A device according to one of claims 7 to 9 characterised in that the screwthread receiving means (27) for the clamping screwthread spindles (26, 26', 26'') are provided in screwthreaded bushes (29) which are mounted in the output member (10) axially immovably and limitedly rotatably between two abutments (30, 30').

11. A device according to claims 8 and 9 characterised in that the clamping screwthread spindles (26', 26'') which are arranged on the working spindle (4) fixedly in the peripheral direction are provided in pairs and are each provided with a toothed pinion (28', 28'') as the input member (12', 12'') for the motion conversion system (9), wherein the first clamping screwthread spindle (26') of the pair of spindles engages with its pinion (28') into a gear ring (15) of the one adjusting wheel (11') and the second clamping screwthread spindle (26'') of the pair of spindles engages with its pinion (28'') into a gear ring (15) of the other adjusting wheel (11''), and that the two clamping screwthread spindles (26', 16'') of the pair of spindles are in oppositely movable engagement with each other by way of a further pinion connection (14'') and have mutually opposite screwthread directions for their clamping screwthreads (27').

12. A device according to claims 2, 5 or 6 and 9 characterised in that the clamping screwthread spindles (26) form the trunnions (14').

13. A device according to one of claims 1 to 12 characterised in that the bracking means is a friction brake which is provided for each adjusting wheel (11', 11''), in particular a shoe-type or axial (disc) brake with the adjusting wheel in the form of the brake disc.

14. A device according to one of claims 1 to 12 characterised in that the braking means (32) for each adjusting wheel (11', 11'') is in the form of an induction machine operating as a brake with the adjusting wheel as a rotor and a stator ring (32', 32'') surrounding the adjusting wheel, with an exciter winding (31) in which the magnitude of the exciter current is controllable.

15. A device according to claim 14 characterised in that the induction machine is in the form of an eddy current brake.

16. A device according to one of claims 13 to 15 characterised in that the bracking means (32) has a measuring means for measuring the magnitude of the braking moment applied to the adjusting wheels (11', 11'').

17. A device according to one of claims 1 to 16 characterised in that there is provided a stationarily arranged adjusting motor (33) whose drive output member (35), in the stationary condition of the working spindle (4), can be coupled to and uncoupled from one of the adjusting wheels (11', 11'') in the direction of rotation.

18. A device according to one of claims 1 to 16 characterised in that the clamping apparatus (1) is rotatably connected to the working spindle (4) or to a part (4'') of the working spindle (4), which carries both the motion conversion system (9) and also a drive member (7) serving to drive the working spindle, and can be coupled to and uncoupled therefrom in the direction of rotation, and that the uncoupled clamping apparatus (1) and at least one of the adjusting wheels (11', 11'') can be locked to prevent rotary movement.

19. A device according to claim 18 characterised in that the clamping apparatus (1) is mounted rotatably on the working spindle (4) and there is provided a coupling means (39, 44) which in the coupled condition non-rotatably connects the clamping apparatus (1) to the working spindle (4).

20. A device according to claim 19 characterised in that there is provided a locking member (40) coming into engagement on the adjusting rod (8) which is non-rotatable connected to the clamping apparatus (1) for fixing the clamping apparatus (1) when the coupling means (39) is open.

21. A device according to claim 19 characterised in that the coupling means (44) has a coupling portion (46) which is axially displaceable between the clamping apparatus (1) and the working spindle (4) and which is non-rotatably connected to the clamping apparatus (1) and which is subjected to the force of a coupling spring (47) in a position of being coupled on the working spindle (4), and that there is provided an adjusting member (49) which is prevented from moving in the peripheral direction of the working spindle (4) and which can be advanced towards the coupling portion (46), in which case it releases the coupling portion (46) from the coupled condition on the working spindle (4) against the force of the coupling spring (47) and at the same time locks it to prevent rotary movement.

22. A device according to claim 21 characterised in that the coupling portion (46) is arranged and guided between two coupling flanges (53, 54) which are mounted rotatably and axially immovably against each other and of which the one coupling flange (53) is fixedly connected to the clamping apparatus (1) and the other coupling flange (54) is fixedly connected to the working spindle (4).

23. A device according to claim 18 characterised in that the working spindle (4) is divided into a spindle portion (4') which fixedly carries the clamping apparatus (1) and a spindle portion (4'') which fixedly carries the motion conversion system (9) and the drive member (7) for the working spindle, and that the two spindle portions (4', 4'') which are rotatable relative to each other are connected by a coupling means (57) and the spindle portion (4') which carries the clamping apparatus (1) can be prevented from rotating in the uncoupled condition of the coupling means (57).

24. A device according to claim 23 characterised in that the spindle portion (4', 4'') which carries the drive member (7) for the working spindle (4) and the motion conversion system (9) is rotatably mounted on the spindle portion (4') which carries the clamping apparatus (1) and which non-rotatably and axially movably carries a coupling member (61) which can be non-rotatably coupled to the other spindle portion (4''), in particular the drive member (7), and can be locked to prevent rotary movement in its uncoupled position.

25. A device according to one or more of the preceding claims characterised in that connected between the output member (10) of the motion conversion system (9) and the adjusting rod (8) are force transmission members which within predetermined limits permit an axial relative displacement between the output member (10) and the adjusting rod (8), wherein the magnitude of the force transmitted between the two depends on the relative displacement travel between them.

26. A device according to claim 25 characterised in that the force transmission members are formed by spring elements (100) which axially support the output member (10) on the adjusting rod (8) in both directions.

## Revendications

1. Dispositif pour produire une force de rappel pour les organes de serrage (2) d'un dispositif de serrage (1), notamment pour déplacer des mâchoires de serrage d'un mandrin de serrage ou de la broche de travail (4) d'un tour, qui porte le dispositif de serrage (1) et peut être entraînée en rotation, et une barre de réglage (8), qui est disposée de manière à être réglable axialement dans la broche creuse de travail (4), pour l'actionnement des organes de serrage (2), et dans lequel un système de conversion de déplacement (9) installé, de manière à pouvoir tourner conjointement, sur la broche de travail (4), possède un organe de sortie (10), qui actionne axialement la barre de réglage (8), et au moins un organe d'entrée (12,12',12''), qui est monté de manière à pouvoir tourner par rapport à la broche de travail (4) et est parallèle à l'axe de cette dernière, est raccordé selon une liaison motrice à au moins l'une de deux roues de réglage (11',11''), qui sont montées rotatives en étant disposées coaxialement l'une à l'autre sur la broche de travail (4) et à cette broche de travail elle-même et sont couplées entre elles avec rotation en des sens opposés, et dans lequel il est prévu un dispositif de freinage (32), au moyen duquel les roues de réglage (11',11'') peuvent être freinées d'une manière indépendante l'une de l'autre, l'intensité du moment de freinage étant commandable.

2. Dispositif selon la revendication 1, caractérisé en ce qu'entre l'organe de sortie (10) du système de conversion de déplacement (9) et la barre de réglage (8), est intercalé un dispositif de liaison (13) qui permet une libre rotation de ces deux éléments l'un par rapport à l'autre et réalise une liaison axiale de force.

3. Dispositif selon les revendications 1 ou 2, caractérisé en ce que pour le couplage avec rotation en des sens opposés des deux roues de réglage (11',11''), il est prévu au moins une unité de transmission (14,14',14''), qui est installée de manière à tourner conjointement sur la broche de travail (4), est raccordée selon une liaison motrice aux roues de réglage (11',11'') et est supportée par la broche de travail (4), dans la direction circonférentielle de cette dernière, de sorte qu'une rotation relative entre une roue de réglage et la broche de travail (4) conduit à une rotation relative de sens opposé de l'autre roue de réglage.

4. Dispositif selon la revendication 3, caractérisé en ce que l'unité de transmission est formée par un ou plusieurs pignons (14) qui engrènent réciproquement, sont montés sur la broche de travail (4) et sont en prise avec des couronnes dentées (15) prévues respectivement sur les roues de réglage (11',11'').

5. Dispositif selon la revendication 3, caractérisé en ce que l'unité de transmission est formée par un ou plusieurs tourillons (14'), sur lesquels sont montés, avec blocage en rotation, respectivement deux pignons (17',17''), qui sont montés de façon à pouvoir tourner dans une bague (18) également montée de manière à pouvoir tourner sur la broche de travail (4), respectivement un pignon (17') des tourillons (14') engrenant avec une couronne dentée (15) située sur l'une des roues de réglage (11'), tandis que l'autre pignon (17'') engrène avec une couronne dentée montée fixe sur la broche de travail (4).

6. Dispositif selon la revendication 5, caractérisé en ce que la seconde roue de réglage (11') est formée directement par la bague (18) qui supporte les tourillons (14').

7. Dispositif selon l'une des revendications 1 à 6, caractérisé en ce que le système de conversion de déplacement (9) possède au moins une broche filetée de serrage (26, 26', 26''), qui est parallèle à l'axe de la broche de travail (4), est disposée de façon excentrée par rapport à cette broche et est montée rotative, sans possibilité de déplacement axial et se déplace, par son filetage de serrage (27'), dans un logement taraudé (27) prévu dans l'organe de sortie (10) du système de conversion de déplacement (9), est en outre raccordée selon une liaison motrice en rotation à au moins l'une des roues de réglage (11',11'') par l'intermédiaire de l'organe d'entrée (12') du système de conversion de déplacement (9) et est supportée par la broche de travail (4), dans la direction circonférentielle de cette dernière, de telle sorte qu'une rotation relative de la broche de travail par rapport à la roue de réglage (11',11''), qui est raccordée selon une liaison motrice à la broche filetée de serrage (26,26',26''), provoque une rotation de la broche filetée de serrage autour de l'axe proprement dit.

8. Dispositif selon la revendication 7, caractérisé en ce que la broche filetée de serrage (26, 26', 26'') est prévue de façon multiple et que les broches filetées de serrage sont réparties sur le pourtour de la broche de travail (4).

9. Dispositif selon la revendication 7 ou 8, caractérisé en ce que la broche filetée de serrage (26,26' ,26'') forme en totalité ou en partie l'unité de transmission (14',14'').

10. Dispositif selon l'une des revendications 7 à 9, caractérisé en ce que les logements taraudés (27) pour les broches filetées de serrage (26,26',26'') sont formés dans des manchons taraudés (29), qui sont montés de manière à pouvoir tourner de façon limitée, sans possibilité de déplacement axial dans l'organe de sortie (10) entre deux butées (30, 3).

11. Dispositif selon les revendications 8 et 9, caractérisé en ce que les broches filetées de serrage (26', 26''), qui sont montées fixes dans la direction circonférentielle sur la broche de travail (4), sont prévues par couples et sont équipées chacune d'un pignon (28',28'') en tant qu'organe d'entrée (12',12'') pour le système de conversion de déplacement (9), la première broche filetée de serrage (26') du couple de broches engrenant par son pignon (28') dans une couronne dentée (15) d'une roue de réglage (11'), tandis que la seconde broche filetée de serrage (26'') du couple de broches engrène par son pignon (28'') dans une couronne dentée (15) de l'autre roue de réglage (11''), et que les deux broches filetées de serrage (26',26'') du couple de broches engrènent entre elles en des sens opposés par l'intermédiaire d'un autre système de liaison à pignon (14'') et leurs filetages de serrage (27') possèdent des sens de filetage réciproquement opposés.

12. Dispositif selon les revendications 2, 5 ou 6 et 9, caractérisé en ce que les broches filetées de serrage (26) forment les tourillons (14').

13. Dispositif selon l'une des revendications 1 à 12, caractérisé en ce que le dispositif de freinage est un frein à friction, qui est prévu pour chaque roue de réglage (11',11''), notamment un frein à mâchoires ou un frein axial (à disques) comportant une roue de réglage agencée sous la forme d'un disque de frein.

14. Dispositif selon l'une des revendications 1 à 12, caractérisé en ce que le dispositif de freinage (32) pour chaque roue de réglage (11',11'') est réalisé sous la forme d'une machine à induction travaillant en tant que frein et comportant la roue de réglage en tant que rotor et un anneau statorique (32',32'') qui entoure la roue de réglage et comporte un enroulement d'excitation (31), dans lequel l'intensité du courant d'excitation est commandable.

15. Dispositif selon la revendication 14, caractérisé en ce que la machine à induction est réalisée sous la forme d'un frein à courants de Foucault.

16. Dispositif selon l'une des revendications 13 à 15, caractérisé en ce que le dispositif de freinage (32) comporte un dispositif de mesure de l'intensité du moment de freinage appliquée aux roues de réglage (11',11'').

17. Dispositif selon l'une des revendications 1 à 16, caractérisé en ce qu'il est prévu un servomoteur (33) installé de façon fixe et dont l'élément de sortie (35) peut être accouplé à l'une des roues de réglage (11',11'') et en être désaccouplé, dans le sens de rotation, lorsque la broche de travail (4) est à l'arrêt.

18. Dispositif selon l'une des revendications 1 à 16, caractérisé en ce que le dispositif de serrage (1) est raccordé en rotation à la broche de travail (4) ou à une partie (4'') de la broche de travail (4), qui porte aussi bien le système de conversion de déplacement (9) qu'un organe d'entraînement (7) utilisé pour l'entraînement de la broche de travail, et peut être accouplé et désaccouplé dans le sens de rotation, et que le dispositif de serrage désaccouplé (1) et au moins l'une des roues de réglage (11', 11'') peuvent être bloqués contre toute rotation.

19. Dispositif selon la revendication 18, caractérisé en ce que le dispositif de serrage (1) est monté rotatif sur la broche de travail (4) et qu'il est prévu un dispositif d'accouplement (39,44), qui, à l'état accouplé, raccorde le dispositif de serrage (1) selon une liaison avec blocage en rotation, à la broche de travail (4).

20. Dispositif selon la revendication 19, caractérisé en ce que pour le blocage du dispositif de serrage (1), alors que le dispositif d'accouplement (39) est ouvert, il est prévu un organe de verrouillage (40), qui engrène avec la barre de réglage (8) raccordée avec blocage en rotation au dispositif de serrage (1).

21. Dispositif selon la revendication 19, caractérisé en ce que le dispositif d'accouplement (44) possède un élément d'accouplement (46), qui est déplaçable axialement entre le dispositif de serrage (1) et la broche de travail (4), est raccordé avec blocage en rotation au dispositif de serrage (1) et est amené, sous la force d'un ressort d'accouplement (47), dans une position accouplée avec la broche de travail (4), et qu'il est prévu un organe de réglage (49), qui est bloqué contre tout déplacement dans la direction circonférentielle de la broche de travail (4) et peut être préréglé contre l'élément d'accouplement (46), auquel cas il dégage l'élément d'accouplement (46) de son état accouplé à la broche de travail (4), à l'encontre de l'action du ressort d'accouplement (47) et le bloque simultanément contre toute rotation.

22. Dispositif selon la revendication 21, caractérisé en ce que l'élément d'accouplement (46) est guidé entre deux brides d'accouplement (53,54), qui sont montées de manière à pouvoir tourner, sans possibilité de déplacement axial réciproque, et dont l'une (53) est raccordée rigidement au dispositif de serrage (1) et dont l'autre (54) est raccordée rigidement dans la broche de travail (4).

23. Dispositif selon la revendication 18, caractérisé en ce que la broche de travail (4) est subdivisée en une section de broche (4') qui porte en position fixe le dispositif de serrage (1), et en une section de broche (4'), qui porte en position fixe le dispositif de conversion de déplacement (9) et l'organe d'entraînement (7) pour la broche de travail, et que les deux sections de broche (4',4''), qui peuvent tourner l'une par rapport à l'autre, sont réunies par un dispositif d'accouplement (57) et que lorsque le dispositif d'accouplement (57) est à l'état désaccouplé, la section de broche (4'), qui porte le dispositif de serrage (1), peut être bloquée contre toute rotation.

24. Dispositif selon la revendication 23, caractérisé en ce que la section de broche (4', 4''), qui porte l'organe d'entraînement (7) pour la broche de travail (4) et le système de conversion de déplacement (9), est montée rotative sur la section de broche (4') qui porte le dispositif de serrage (1) et qui porte avec blocage en rotation et possibilité de déplacement axial, un organe d'accouplement (61) qui peut être accouplé avec blocage en rotation à l'autre section de broche (4''), notamment à l'organe d'entraînement (7) et, dans sa position désaccouplée, est bloquée contre toute rotation.

25. Dispositif selon une ou plusieurs des revendications précédentes, caractérisé en ce qu'entre l'organe de sortie (10) du système de conversion de déplacement (9) et la barre de réglage (8) sont montés des organes de transmission de force, qui permettent, entre des limites prédéterminées, un déplacement axial relatif entre l'organe de sortie (10) et la barre de réglage (8), l'intensité de la force transmise entre les deux unités dépendant du trajet de déplacement relatif entre ces unités.

26. Dispositif selon la revendication 25, caractérisé en ce que les organes de transmission de force sont constitués par des éléments de ressorts (100), qui supportent axialement l'organe de sortie (10), dans les deux sens, sur la barre de réglage (8).
